# EUROPEAN PATENT SPECIFICATION

(11) **EP 2 975 500 B1**
(45) Date of publication and mention of the grant of the patent: **28.03.2018**
(21) Application number: 15001919.8
(22) Date of filing: 29.06.2015
(51) Int. Cl.: G06F 3/041, G06F 3/0488

(54) **MOBILE TERMINAL, ADAPTED FOR EXECUTING VARIOUS FUNCTIONS WITH ONLY ONE INPUT WHILE A DISPLAY IS IN AN OFF STATE**
MOBILES ENDGERÄT, GEEIGNET ZUR DURCHFÜHRUNG VERSCHIEDENER FUNKTIONEN MIT EINER EINZIGEN TOUCH-EINGABE BEI AUSGESCHALTETER ANZEIGE
TERMINAL MOBILE, ADAPTE POUR L'EXECUTION DE DIFFERENTES FONCTIONS A L'AIDE D'UNE SAISIE TACTILE UNIQUE L'ECRAN ETANT ETEINT

(30) Priority: 15.07.2014 US 201462024851 P; 11.12.2014 KR 20140178775
(43) Date of publication of application: 20.01.2016
(73) Proprietor: LG Electronics Inc., Yeongdeungpo-gu Seoul 150-721 (KR)
(72) Inventor: Kang, Raehoon, 137-893 Seoul (KR); KIM, Hyungsun, 137-893 Seoul (KR); LEE, Seulah, 137-893 Seoul (KR)
(74) Representative: Beyer, Andreas

(56) References cited:
- EP-A1- 2 249 240
- US-A1- 2008 158 170

## Description

### BACKGROUND OF THE INVENTION

### 1. Field of the invention

The present disclosure relates to a mobile terminal having a touch screen and a control method thereof, and more particularly, to a mobile terminal for classifying a touch type according to a finger portion brought into contact with the touch screen to perform a different function and a control method thereof.

### 2. Description of the related art

Terminals can be classified into two types, such as a mobile or portable terminal and a stationary terminal based on its mobility. Furthermore, the mobile terminal can be further classified into two types, such as a handheld terminal and a vehicle mount terminal based on whether or not it can be directly carried by a user.

The functionality of the mobile terminal has been diversified. For example, there are functions of data and voice communication, photo capture and video capture through a camera, voice recording, music file reproduction through a speaker system, and displaying an image or video on the display unit. Some terminals may additionally perform an electronic game play function or perform a multimedia play function. In particular, recent terminals may receive multicast signals for providing video contents such as broadcasts, videos, television programs, or the like.

As it becomes multifunctional, for example, such a terminal is allowed to capture still images or moving images, play music or video files, play games, receive broadcast and the like, so as to be implemented as an integrated multimedia player.

In order to support and enhance the functions of the terminal, the improvement of structural or software elements of the terminal may be taken into consideration.

In recent years, as a mobile terminal provides various composite functions, a menu structure thereof has also been complicated. However, the size of the mobile terminal should be limited due to its portability, and as a result it may be impossible to display all the menus on one screen due to the physical restriction of a touch screen provided therein. In order to solve the foregoing drawbacks, though there has been presented a method of applying a plurality of inputs to the menus having a tree structure to execute a specific function, there is a user's need for executing a specific function with a single input in a convenient manner, for example.

EP 2 249 240 is directed to a mobile terminal for performing different operations according to a type (fingertip or nail) of touch input. When a fingertip is applied to an icon, an application is executed. When a nail is applied to an icon, a menu related to an application is displayed.

KR101404234B discloses a mobile terminal allowing different functions to be executed in the process of unlocking the display.

### SUMMARY OF THE INVENTION

An object of the present disclosure is to solve the foregoing and other problems. Another object of the present disclosure is to provide a mobile terminal for classifying a touch type according to a finger portion brought into contact with the touch screen to perform a different function and a control method thereof.

In order to accomplish the foregoing and other objects, according to an aspect of the present disclosure, a mobile terminal may include a touch screen, a sensing unit configured to sense a touch input applied to the touch screen, and a controller configured to control at least one of executable functions in the terminal when a touch input corresponding to a preset scheme is applied to the touch screen, wherein the controller executes a first function when the touch input corresponding to the preset scheme is applied with a fingertip, and executes a second function different from the first function when applied with a nail.

According to an embodiment, the touch input corresponding to the preset scheme may include a first and a second touch input consecutively knocking a predetermined region of the touch screen within a reference period of time.

According to an embodiment, the touch screen may be configured to be switched from either one of an active state in which an illumination is on and an inactive state in which the illumination is off to the other one, and the controller may execute the first function or the second function according to the touch input corresponding to the preset scheme when the touch input corresponding to the preset scheme is applied while the touch screen is in an inactive state.

According to an embodiment, the controller may switch the touch screen in the inactive state to the active state when the touch input corresponding to the preset scheme is applied while the touch screen is in the inactive state, and display a first execution screen according to the execution of the first function on the touch screen that has been switched to the active state when the touch input corresponding to the preset scheme is applied with the fingertip, and display a second execution screen according to the execution of the second function on the touch screen that has been switched to the active state when applied with the nail.

According to an embodiment, the first execution screen may be a locked screen formed to release the locked state of the terminal, and the second execution screen may be displayed in a state that the locked state is released.

According to an embodiment, the controller may switch the touch screen in the active state to the inactive state, and display a locked screen formed to release the locked state of the terminal when the touch input corresponding to the preset scheme is applied with the fingertip while the touch screen is in an inactive state, and maintain the terminal in the inactive state, and activate a microphone to receive a voice command from a user when the touch input corresponding to the preset scheme is applied with the nail while the touch screen is in an inactive state.

According to an embodiment, the touch screen may be configured to be switched from either one of an active state in which the illumination is on and an inactive state in which the illumination is off to the other one, and the controller may switch the touch screen from the active state to the inactive state when the touch input corresponding to the preset scheme is applied with the fingertip while the touch screen is in an active state, and execute the second function while maintaining the touch screen in the active state when the touch input corresponding to the preset scheme is applied with the nail while the touch screen is in an active state.

According to an embodiment, the touch input corresponding to the preset scheme may include a plurality of touch inputs consecutively applied to the touch screen in a sequence matching a preset pattern in an inactive state in which the illumination of the touch screen is off, and the controller may release a locked state of the terminal, and switch the touch screen in the inactive state to an active state in which the illumination is on in response to the touch input corresponding to the preset mode, and execute the first function or the second function according to the touch input corresponding to the preset mode.

According to an embodiment, the controller may display a first execution screen according to the execution of the first function when the touch input corresponding to the preset scheme is applied with the fingertip, and display a second execution screen according to the execution of the second function when applied with the nail.

According to an embodiment, the touch screen may display screen information in an active state in which the illumination is on, and the controller may switch the screen information to a locked screen when a locked state for limiting the input of a control command is executed, and the controller may switch one region of the locked screen based on a touch input to part of the screen information when the touch input is applied to the touch screen in the locked state.

According to an embodiment, the one region may be formed in a different size when a touch input is applied with the fingertip and when applied with the nail.

According to an embodiment, the controller may release the locked state when the movement of a touch input corresponds to the preset scheme in a state that part of the screen information is displayed on the touch screen.

According to an embodiment, the controller may extend a range displayed with part of the screen information based on the movement of the touch input.

According to an embodiment, upon releasing the locked state, the controller may display a first execution screen according to the execution of the first function when the touch input corresponding to the preset scheme is applied with the fingertip, and display a second execution screen according to the execution of the second function when applied with the nail.

According to an embodiment, the touch screen may display a home screen page containing an object formed to execute a preset application, and the controller may execute the application when a touch input due to the fingertip is applied to the object, and display information associated with an event generated from the application in at least one region of the touch screen when a touch input due to the nail is applied to the object.

According to an embodiment, when there is no event generated from the application, an execution screen of the application instead of the information may be displayed in the at least one region.

According to an embodiment, the mobile terminal may further include an optical output unit configured to output light corresponding to at least one of a plurality of colors, wherein the controller controls the optical output unit to output light corresponding to a first color when a touch input due to the fingertip is applied to the touch screen, and controls the optical output unit to output light corresponding to a second color different from the first color when a touch input due to the nail is applied to the touch screen.

According to an embodiment, the sensing unit or the controller may classify a touch input based on at least one of a vibration characteristic, a sound characteristic, a size of contact area and an intensity of pressure that are sensed when the touch input is applied to the touch screen.

According to an embodiment, the sensing unit or the controller may activate a microphone when a first touch input is applied to the touch screen, and determine the type of an object to which a second touch input is applied based on a sound characteristic received from the activated microphone when the second touch input is applied within a reference period of time since then.

According to an embodiment, the microphone may be deactivated unless the second touch input is applied within the reference period of time.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1A is a block diagram for explaining a mobile terminal associated with the present disclosure;
FIGS. 1B and 1C are conceptual views illustrating an example in which a mobile terminal associated with the present disclosure is seen from different directions;
FIG. 2 is a conceptual view for explaining a touch type classified according to a finger portion brought into contact with the touch screen;
FIG. 3 is a conceptual view for explaining a method of classifying a touch input applied to the touch screen;
FIG. 4 is a flow chart for explaining a control method of a mobile terminal according to an embodiment of the present disclosure;
FIGS. 5A through 9 are conceptual views illustrating different controls according to different touch types thereof for an example of operation implemented by the mobile terminal of FIG. 4;
FIGS. 10A and 10B are conceptual views for explaining an embodiment of executing different functions according to the touch type of a touch input applied to the touch screen in an inactive state;
FIGS. 11A through 15 are conceptual views for explaining an embodiment of executing different functions according to the touch type of a touch input applied to an object;
FIGS. 16A through 20B are conceptual views for explaining the operation of a mobile terminal when a dragging input due to a nail is applied;
FIGS. 21A, 21B, 21C and 21D are conceptual views for explaining the operation of a mobile terminal when a touch input due to a nail is applied; and
FIG. 22 is a conceptual view for explaining the operation of a mobile terminal when a touch input due to a knuckle is applied.

### DETAILED DESCRIPTION OF THE INVENTION

Description will now be given in detail according to the exemplary embodiments disclosed herein, with reference to the accompanying drawings. For the sake of brief description with reference to the drawings, the same or equivalent components will be provided with the same reference numbers, and description thereof will not be repeated. A suffix "module" and "unit" used for constituent elements disclosed in the following description is merely intended for easy description of the specification, and the suffix itself does not give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

Mobile terminals described herein may include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like.

However, it may be easily understood by those skilled in the art that the configuration according to the exemplary embodiments of this specification can also be applied to stationary terminals such as digital TV, desktop computers and the like, excluding a case of being applicable only to the mobile terminals.

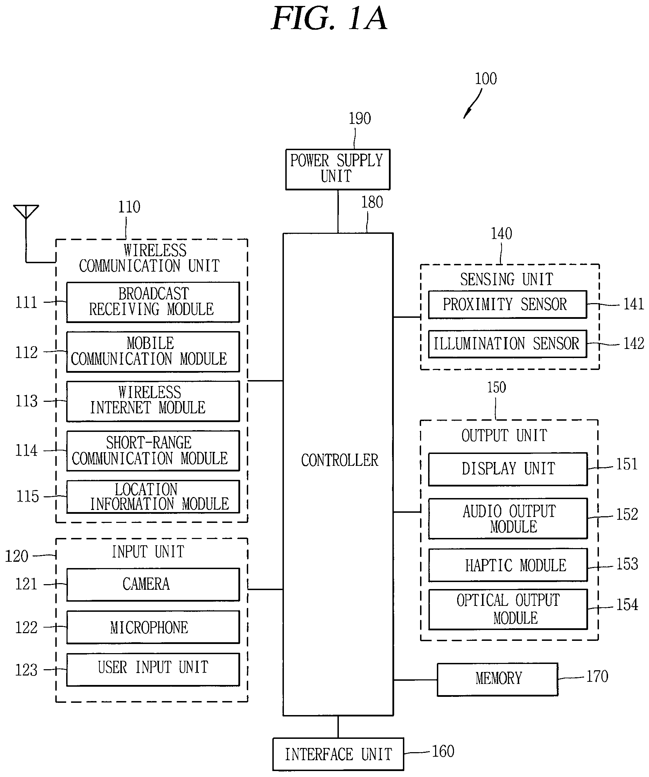

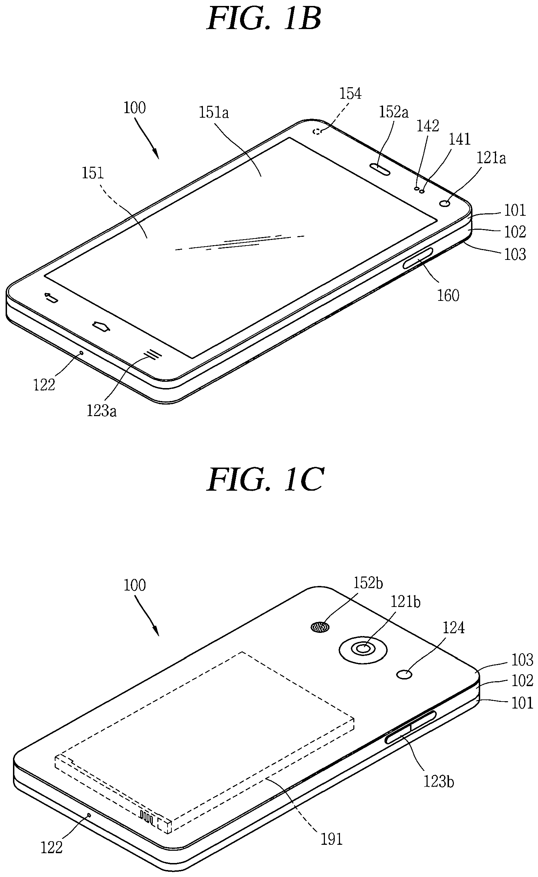

Referring to FIGS. 1A through 1C, FIG. 1A is a block diagram of a mobile terminal in accordance with the present disclosure, and FIGS. 1B and 1C are conceptual views of one example of the mobile terminal, viewed from different directions.

The mobile terminal 100 may include components, such as a wireless communication unit 110, an input unit 120, a sensing unit 140, an output unit 150, an interface unit 160, a memory 170, a controller 180, a power supply unit 190 and the like. FIG. 1A illustrates the mobile terminal having various components, but it may be understood that implementing all of the illustrated components is not a requirement. Greater or fewer components may alternatively be implemented.

In more detail, the wireless communication unit 110 of those components may typically include one or more modules which permit wireless communications between the mobile terminal 100 and a wireless communication system, between the mobile terminal 100 and another mobile terminal 100, or between the mobile terminal 100 and a network within which another mobile terminal 100 (or an external server) is located.

For example, the wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). On the other hand, the mobile terminal disclosed herein may utilize information in such a manner of combining information sensed by at least two sensors of those sensors.

The output unit 150 may be configured to output an audio signal, a video signal or a tactile signal. The output unit 150 may include a display unit 151, an audio output module 152, a haptic module 153, an optical output module 154 and the like. The display unit 151 may have an inter-layered structure or an integrated structure with a touch sensor so as to implement a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

Furthermore, the memory 170 stores data supporting various functions of the mobile terminal 100. The memory 170 may store a plurality of application programs (or applications) executed in the mobile terminal 100, data for operations of the mobile terminal 100, instruction words, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). On the other hand, the application programs may be stored in the memory 170, installed in the mobile terminal 100, and executed by the controller 180 to perform an operation (or a function) of the mobile terminal 100.

The controller 180 may typically control an overall operation of the mobile terminal 100 in addition to the operations associated with the application programs. The controller 180 may provide or process information or functions appropriate for a user in a manner of processing signals, data, information and the like, which are input or output by the aforementioned components, or activating the application programs stored in the memory 170.

The controller 180 may control at least part of the components illustrated in FIG. 1, in order to drive the application programs stored in the memory 170. In addition, the controller 180 may drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various exemplary embodiments described herein. Also, the operation and control or the control method of the mobile terminal may be implemented in the mobile terminal in such a manner of activating at least one application program stored in the memory 170.

Hereinafter, each aforementioned component will be described in more detail with reference to FIG. 1A, prior to explaining various exemplary embodiments implemented by the mobile terminal 100 having the configuration.

First, the wireless communication unit 110 will be described. The broadcast receiving module 111 of the wireless communication unit 110 may receive a broadcast signal and/or broadcast associated information from an external broadcast managing entity via a broadcast channel. The broadcast channel may include a satellite channel and a terrestrial channel. At least two broadcast receiving modules 111 may be provided in the mobile terminal 100 to simultaneously receive at least two broadcast channels or switch the broadcast channels.

The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

The broadcast signal may be encoded according to at least one of technical standards (or transmission methods, for example, DVB, ATSC, etc.) for transmission and reception of digital broadcast signals. The broadcast receiving module 111 may receive the digital broadcast signals using a method appropriate for a technical specification defined in the technical standards.

Examples of the broadcast associated information may include information associated with a broadcast channel, a broadcast program, a broadcast service provider, or the like. The broadcast associated information may also be provided via a mobile communication network, and, in this case, received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 may transmit/receive wireless signals to/from at least one of network entities, for example, a base station, an external mobile terminal, a server, and the like, on a mobile communication network, which is constructed according to technical standards or transmission methods for mobile communications (for example, Global System for Mobile Communication (GSM), Code Division Multi Access (CDMA), EV-DO (Enhanced Voice-Data Optimized or Enhanced Voice-Data Only), Wideband CDMA (WCDMA), High Speed Downlink Packet access (HSDPA), Long Term Evolution (LTE), Long Term Evolution-Advanced (LTE-A), etc.)

Here, the wireless signals may include audio call signal, video (telephony) call signal, or various formats of data according to transmission/reception of text/multimedia messages.

The wireless Internet module 113 denotes a module for wireless Internet access. This module may be internally or externally coupled to the mobile terminal 100. The wireless Internet module 113 may transmit/receive wireless signals via communication networks according to wireless Internet technologies.

Examples of such wireless Internet access may include Wireless LAN (WLAN), Wireless Fidelity (Wi-Fi) Direct, Digital Living Network Alliance (DLNA), Wireless Broadband (Wibro), Worldwide Interoperability for Microwave Access (WiMAX), High Speed Downlink Packet Access (HSDPA), Long Term Evolution (LTE), Long Term Evolution-Advanced (LTE-A) and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LTE, LTE-A and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless Universal Serial Bus (Wireless USB) and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks. The wireless area networks may be wireless personal area networks.

Here, the another mobile terminal 100 may be a wearable device, for example, a smart watch, a smart glass or a head mounted display (HMD), which is able to exchange data with the mobile terminal 100 (or to cooperate with the mobile terminal 100). The short-range communication module 114 may sense (recognize) a wearable device, which is able to communicate with the mobile terminal), near the mobile terminal 100. In addition, when the sensed wearable device is a device which is authenticated to communicate with the mobile terminal 100 according to the present disclosure, the controller 180 may transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user may check the received message using the wearable device.

The location information module 115 denotes a module for detecting or calculating a position of the mobile terminal. An example of the location information module 115 may include a Global Position System (GPS) module or a Wi-Fi module. For example, when the mobile terminal uses the GPS module, a position of the mobile terminal may be acquired using a signal sent from a GPS satellite. As another example, when the mobile terminal uses the Wi-Fi module, a position of the mobile terminal may be acquired based on information related to a wireless access point (AP) which transmits or receives a wireless signal to or from the Wi-Fi module. According to the need, the location information module 115 may perform any function of the other modules of the wireless communication unit 110 to obtain data on the location of the mobile terminal. As a module used to acquire the location (or current location) of the mobile terminal, the location information module 115 may not be necessarily limited to a module for directly calculating or acquiring the location of the mobile terminal.

Hereinafter, the input unit 120 will be described in more detail. The input unit 120 may be configured to provide an audio or video signal (or information) input to the mobile terminal or information input by a user to the mobile terminal. For the input of the audio information, the mobile terminal 100 may include one or a plurality of cameras 121. The camera 121 may process image frames of still pictures or video obtained by image sensors in a video call mode or a capture mode. The processed image frames may be displayed on the display unit 151. On the other hand, the plurality of cameras 121 disposed in the mobile terminal 100 may be arranged in a matrix configuration. By use of the cameras 121 having the matrix configuration, a plurality of image information having various angles or focal points may be input into the mobile terminal 100. Also, the plurality of cameras 121 may be arranged in a stereoscopic structure to acquire a left image and a right image for implementing a stereoscopic image.

The microphone 122 may process an external audio signal into electric audio data. The processed audio data may be utilized in various manners according to a function being executed in the mobile terminal 100 (or an application program being executed). On the other hand, the microphone 122 may include assorted noise removing algorithms to remove noise generated in the course of receiving the external audio signal.

The user input unit 123 may receive information input by a user. When information is input through the user input unit 123, the controller 180 may control an operation of the mobile terminal 100 to correspond to the input information. The user input unit 123 may include a mechanical input element (or a mechanical key, for example, a button located on a front/rear surface or a side surface of the mobile terminal 100, a dome switch, a jog wheel, a jog switch, etc.), and a touch-sensitive input means. As one example, the touch-sensitive input means may be a virtual key, a soft key or a visual key, which is displayed on a touch screen through software processing, or a touch key which is disposed on a portion except for the touch screen. On the other hand, the virtual key or the visual key may be displayable on the touch screen in various shapes, for example, graphic, text, icon, video or a combination thereof.

The sensing unit 140 may sense at least one of internal information of the mobile terminal, surrounding environment information of the mobile terminal and user information, and generate a sensing signal corresponding to it. The controller 180 may control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the mobile terminal covered by the touch screen, or near the touch screen.

The proximity sensor 141, for example, may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity sensor 141 may sense proximity of a pointer to the touch screen by changes of an electromagnetic field, which is responsive to an approach of an object with conductivity. In this case, the touch screen (touch sensor) may be categorized into a proximity sensor.

Hereinafter, for the sake of brief explanation, a status that the pointer is positioned to be proximate onto the touch screen without contact will be referred to as 'proximity touch,' whereas a status that the pointer substantially comes in contact with the touch screen will be referred to as 'contact touch.' For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving status, etc.). On the other hand, the controller 180 may process data (or information) corresponding to the proximity touches and the proximity touch patterns sensed by the proximity sensor 141, and output visual information corresponding to the process data on the touch screen. In addition, the controller 180 may control the mobile terminal 100 to execute different operations or process different data (or information) according to whether a touch with respect to the same point on the touch screen is either a proximity touch or a contact touch.

A touch sensor may sense a touch (or touch input) applied onto the touch screen (or the display unit 151) using at least one of various types of touch methods, such as a resistive type, a capacitive type, an infrared type, a magnetic field type, and the like.

As one example, the touch sensor may be configured to convert changes of pressure applied to a specific part of the display unit 151 or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180 or the controller 180 itself.

On the other hand, the controller 180 may execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program.

Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swipe touch, a hovering touch, and the like.

An ultrasonic sensor may be configured to recognize position information relating to a sensing object by using ultrasonic waves. The controller 180 may calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using the fact. In more detail, the position of the wave generation source may be calculated by using a time difference from the time that the ultrasonic wave reaches based on the light as a reference signal.

The camera 121 constructing the input unit 120 may be a type of camera sensor. The camera sensor may include at least one of a photo sensor and a laser sensor.

The camera 121 and the laser sensor may be combined to detect a touch of the sensing object with respect to a 3D stereoscopic image. The photo sensor may be laminated on the display device. The photo sensor may be configured to scan a movement of the sensing object in proximity to the touch screen. In more detail, the photo sensor may include photo diodes and transistors at rows and columns to scan content placed on the photo sensor by using an electrical signal which changes according to the quantity of applied light. Namely, the photo sensor may calculate the coordinates of the sensing object according to variation of light to thus obtain position information of the sensing object.

The display unit 151 may output information processed in the mobile terminal 100. For example, the display unit 151 may display execution screen information of an application program driven in the mobile terminal 100 or user interface (UI) and graphic user interface (GUI) information in response to the execution screen information.

The display unit 151 may also be implemented as a stereoscopic display unit for displaying stereoscopic images.

The stereoscopic display unit 152 may employ a stereoscopic display scheme such as stereoscopic scheme (a glass scheme), an auto-stereoscopic scheme (glassless scheme), a projection scheme (holographic scheme), or the like.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may also provide audible output signals related to a particular function (e.g., a call signal reception sound, a message reception sound, etc.) performed by the mobile terminal 100. The audio output module 152 may include a receiver, a speaker, a buzzer or the like.

A haptic module 153 may generate various tactile effects the that user may feel. A typical example of the tactile effect generated by the haptic module 153 may be vibration. Strength, pattern and the like of the vibration generated by the haptic module 153 may be controllable by a user selection or setting of the controller. For example, the haptic module 153 may output different vibrations in a combining manner or a sequential manner.

Besides vibration, the haptic module 153 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 may be implemented to allow the user to feel a tactile effect through a muscle sensation such as the user's fingers or arm, as well as transferring the tactile effect through a direct contact. Two or more haptic modules 153 may be provided according to the configuration of the mobile terminal 100.

An optical output module 154 may output a signal for indicating an event generation using light of a light source. Examples of events generated in the mobile terminal 100 may include a message reception, a call signal reception, a missed call, an alarm, a schedule notice, an email reception, an information reception through an application, and the like.

A signal output by the optical output module 154 may be implemented in such a manner that the mobile terminal emits monochromatic light or light with a plurality of colors. The signal output may be terminated as the mobile terminal senses a user's event checking.

The interface unit 160 may serve as an interface with every external device connected with the mobile terminal 100. For example, the interface unit 160 may receive data transmitted from an external device, receive power to transfer to each element within the mobile terminal 100, or transmit internal data of the mobile terminal 100 to an external device. For example, the interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (referred to as 'identifying device', hereinafter) may take the form of a smart card. Accordingly, the identifying device may be connected with the terminal 100 via the interface unit 160.

When the mobile terminal 100 is connected with an external cradle, the interface unit 160 may serve as a passage to allow power from the cradle to be supplied to the mobile terminal 100 therethrough or may serve as a passage to allow various command signals input by the user from the cradle to be transferred to the mobile terminal therethrough. Various command signals or power input from the cradle may operate as signals for recognizing that the mobile terminal is properly mounted on the cradle.

The memory 170 may store programs for operations of the controller 180 and temporarily store input/output data (for example, phonebook, messages, still images, videos, etc.). The memory 170 may store data related to various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 170 over the Internet.

As aforementioned, the controller 180 may typically control the general operations of the mobile terminal 100. For example, the controller 180 may set or release a lock state for restricting a user from inputting a control command with respect to applications when a status of the mobile terminal meets a preset condition.

The controller 180 may also perform controlling and processing associated with voice calls, data communications, video calls, and the like, or perform pattern recognition processing to recognize a handwriting input or a picture drawing input performed on the touch screen as characters or images, respectively. In addition, the controller 180 may control one or combination of those components in order to implement various exemplary embodiment disclosed herein on the mobile terminal 100.

The power supply unit 190 may receive external power or internal power and supply appropriate power required for operating respective elements and components included in the mobile terminal 100 under the control of the controller 180. The power supply unit 190 may include a battery. The battery may be an embedded battery which is rechargeable or be detachably coupled to the terminal body for charging.

The power supply unit 190 may include a connection port. The connection port may be configured as one example of the interface unit 160 to which an external (re)charger for supplying power to recharge the battery is electrically connected.

As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable or its similar medium using, for example, software, hardware, or any combination thereof.

Referring to FIGS. 1B and 1C, the mobile terminal 100 disclosed herein may be provided with a bar-type terminal body. However, the present disclosure may not be limited to this, but also may be applicable to various structures such as watch type, clip type, glasses type or folder type, flip type, slide type, swing type, swivel type, or the like, in which two and more bodies are combined with each other in a relatively movable manner. The description to be associated with a specific type of mobile terminal or on a specific type of mobile terminal will be also typically applied to another type of mobile terminal.

Here, the terminal body may be understood as a conception which indicates the mobile terminal 100 as at least one assembly.

The mobile terminal 100 may include a case (casing, housing, cover, etc.) forming the appearance of the terminal. In this embodiment, the case may be divided into a front case 101 and a rear case 102. Various electronic components may be incorporated into a space formed between the front case 101 and the rear case 102. At least one middle case may be additionally disposed between the front case 101 and the rear case 102

A display unit 151 may be disposed on a front surface of the terminal body to output information. As illustrated, a window 151a of the display unit 151 may be mounted to the front case 101 so as to form the front surface of the terminal body together with the front case 101.

In some cases, electronic components may also be mounted to the rear case 102. Examples of those electronic components mounted to the rear case 102 may include a detachable battery, an identification module, a memory card and the like. Here, a rear cover 103 for covering the electronic components mounted may be detachably coupled to the rear case 102. Therefore, when the rear cover 103 is detached from the rear case 102, the electronic components mounted to the rear case 102 may be externally exposed.

As illustrated, when the rear cover 103 is coupled to the rear case 102, a side surface of the rear case 102 may be partially exposed. In some cases, upon the coupling, the rear case 102 may also be completely shielded by the rear cover 103. On the other hand, the rear cover 103 may include an opening for externally exposing a camera 121b or an audio output module 152b.

The cases 101, 102, 103 may be formed by injection-molding synthetic resin or may be formed of a metal, for example, stainless steel (STS), titanium (Ti), or the like.

Unlike the example which the plurality of cases form an inner space for accommodating such various components, the mobile terminal 100 may be configured such that one case forms the inner space. In this example, a mobile terminal 100 having a uni-body formed in such a manner that synthetic resin or metal extends from a side surface to a rear surface may also be implemented.

On the other hand, the mobile terminal 100 may include a waterproofing unit (not shown) for preventing an introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal may include a display unit 151, first and second audio output modules 152a and 152b, a proximity sensor 141, an illumination sensor 152, an optical output module 154, first and second cameras 121a and 121b, first and second manipulation units 123a and 123b, a microphone 122, an interface unit 160 and the like.

Hereinafter, description will be given of an exemplary mobile terminal 100 that the display unit 151, the first audio output module 152a, the proximity sensor 141, the illumination sensor 142, the optical output module 154, the first camera 121a and the first manipulation unit 123a are disposed on the front surface of the terminal body, the second manipulation unit 123b, the microphone 122 and the interface unit 160 are disposed on a side surface of the terminal body, and the second audio output module 152b and the second camera 121b are disposed on a rear surface of the terminal body, with reference to FIGS. 1B and 1C.

Here, those components may not be limited to the arrangement, but be excluded or arranged on another surface if necessary. For example, the first manipulation unit 123a may not be disposed on the front surface of the terminal body, and the second audio output module 152b may be disposed on the side surface other than the rear surface of the terminal body.

The display unit 151 may output information processed in the mobile terminal 100. For example, the display unit 151 may display execution screen information of an application program driven in the mobile terminal 100 or user interface (UI) and graphic user interface (GUI) information in response to the execution screen information.

The display unit 151 may include at least one of a liquid crystal display (LCD), a thin film transistor-liquid crystal display (TFT-LCD), an organic light emitting diode (OLED), a flexible display, a 3-dimensional (3D) display, and an e-ink display.

The display unit 151 may be implemented in two or more in number according to a configured aspect of the mobile terminal 100. For instance, a plurality of the display units 151 may be arranged on one surface to be spaced apart from or integrated with each other, or may be arranged on different surfaces.

The display unit 151 may include a touch sensor which senses a touch onto the display unit so as to receive a control command in a touching manner. When a touch is input to the display unit 151, the touch sensor may be configured to sense this touch and the controller 180 may generate a control command corresponding to the touch. The content which is input in the touching manner may be a text or numerical value, or a menu item which can be indicated or designated in various modes.

The touch sensor may be configured in a form of film having a touch pattern. The touch sensor may be a metal wire, which is disposed between the window 151a and a display (not shown) on a rear surface of the window 151a or patterned directly on the rear surface of the window 151a. Or, the touch sensor may be integrally formed with the display. For example, the touch sensor may be disposed on a substrate of the display or within the display.

The display unit 151 may form a touch screen together with the touch sensor. Here, the touch screen may serve as the user input unit 123 (see FIG. 1A). Therefore, the touch screen may replace at least some of functions of the first manipulation unit 123a.

The first audio output module 152a may be implemented in the form of a receiver for transferring voice sounds to the user's ear or a loud speaker for outputting various alarm sounds or multimedia reproduction sounds.

The window 151a of the display unit 151 may include a sound hole for emitting sounds generated from the first audio output module 152a. Here, the present disclosure may not be limited to this. It may also be configured such that the sounds are released along an assembly gap between the structural bodies (for example, a gap between the window 151a and the front case 101). In this case, a hole independently formed to output audio sounds may not be seen or hidden in terms of appearance, thereby further simplifying the appearance of the mobile terminal 100.

The optical output module 154 may output light for indicating an event generation. Examples of the event generated in the mobile terminal 100 may include a message reception, a call signal reception, a missed call, an alarm, a schedule notice, an email reception, information reception through an application, and the like. When a user's event checking is sensed, the controller may control the optical output unit 154 to stop the output of the light.

The first camera 121a may process video frames such as still or moving images obtained by the image sensor in a video call mode or a capture mode. The processed video frames may be displayed on the display unit 151 or stored in the memory 170.

The first and second manipulation units 123a and 123b are examples of the user input unit 123, which may be manipulated by a user to input a command for controlling the operation of the mobile terminal 100. The first and second manipulation units 123a and 123b may also be commonly referred to as a manipulating portion, and may employ any method if it is a tactile manner allowing the user to perform manipulation with a tactile feeling such as touch, push, scroll or the like.

The drawings are illustrated on the basis that the first manipulation unit 123a is a touch key, but the present disclosure may not be necessarily limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the display unit 151, or the like.

On the other hand, as another example of the user input unit 123, a rear input unit (not shown) may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the display unit 151, or the like. The rear input unit may be implemented into a form allowing a touch input, a push input or a combination thereof.

The rear input unit may be disposed to overlap the display unit 151 of the front surface in a thickness direction of the terminal body. As one example, the rear input unit may be disposed on an upper end portion of the rear surface of the terminal body such that a user can easily manipulate it using a forefinger when the user grabs the terminal body with one hand. However, the present disclosure may not be limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the display unit 151 may be implemented to have a larger screen.

On the other hand, the mobile terminal 100 may include a finger scan sensor which scans a user's fingerprint. The controller may use fingerprint information sensed by the finger scan sensor as an authentication means. The finger scan sensor may be installed in the display unit 151 or the user input unit 123.

The microphone 122 may be formed to receive the user's voice, other sounds, and the like. The microphone 122 may be provided at a plurality of places, and configured to receive stereo sounds.

The interface unit 160 may serve as a path allowing the mobile terminal 100 to exchange data with external devices. For example, the interface unit 160 may be at least one of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b may be further mounted to the rear surface of the terminal body. The second camera 121b may have an image capturing direction, which is substantially opposite to the direction of the first camera unit 121a.

The second camera 121b may include a plurality of lenses arranged along at least one line. The plurality of lenses may also be arranged in a matrix configuration. The cameras may be referred to as an 'array camera.' When the second camera 121b is implemented as the array camera, images may be captured in various manners using the plurality of lenses and images with better qualities may be obtained.

A flash 124 may be disposed adjacent to the second camera 121b. When an image of a subject is captured with the camera 121b, the flash 124 may illuminate the subject.

The second audio output module 152b may further be disposed on the terminal body. The second audio output module 152b may implement stereophonic sound functions in conjunction with the first audio output module 152a (refer to FIG. 1A), and may be also used for implementing a speaker phone mode for call communication.

At least one antenna for wireless communication may be disposed on the terminal body. The antenna may be installed in the terminal body or formed on the case. For example, an antenna which configures a part of the broadcast receiving module 111 (see FIG. 1A) may be retractable into the terminal body. Alternatively, an antenna may be formed in a form of film to be attached onto an inner surface of the rear cover 103 or a case including a conductive material may serve as an antenna.

A power supply unit 190 for supplying power to the mobile terminal 100 may be disposed on the terminal body. The power supply unit 190 may include a batter 191 which is mounted in the terminal body or detachably coupled to an outside of the terminal body.

The battery 191 may receive power via a power source cable connected to the interface unit 160. Also, the battery 191 may be (re)chargeable in a wireless manner using a wireless charger. The wireless charging may be implemented by magnetic induction or electromagnetic resonance.

On the other hand, the drawing illustrates that the rear cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 may further be provided on the mobile terminal 100. As one example of the accessory, a cover or pouch for covering or accommodating at least one surface of the mobile terminal 100 may be provided. The cover or pouch may cooperate with the display unit 151 to extend the function of the mobile terminal 100. Another example of the accessory may be a touch pen for assisting or extending a touch input onto a touch screen.

On the other hand, the sensing unit 140 or controller 180 may classify a touch type (or a type of object that has applied a touch) according to a finger portion brought into contact with the touch screen 151. Furthermore, the controller 180 may execute a different function according to the touch type. Hereinafter, a mobile terminal capable of providing a new user interface based on a touch type and a control method thereof will be described with reference to the accompanying drawings.

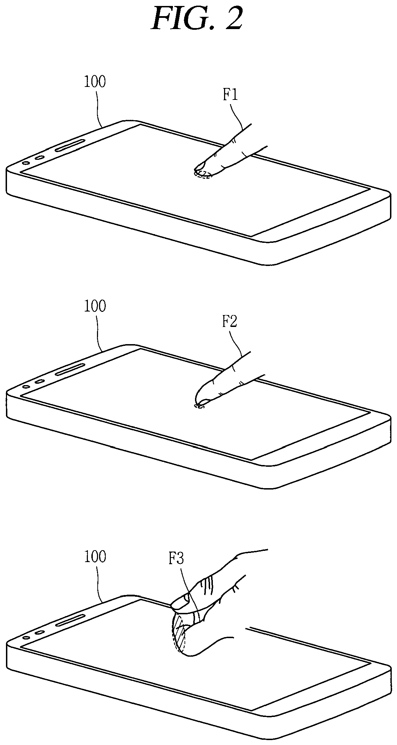

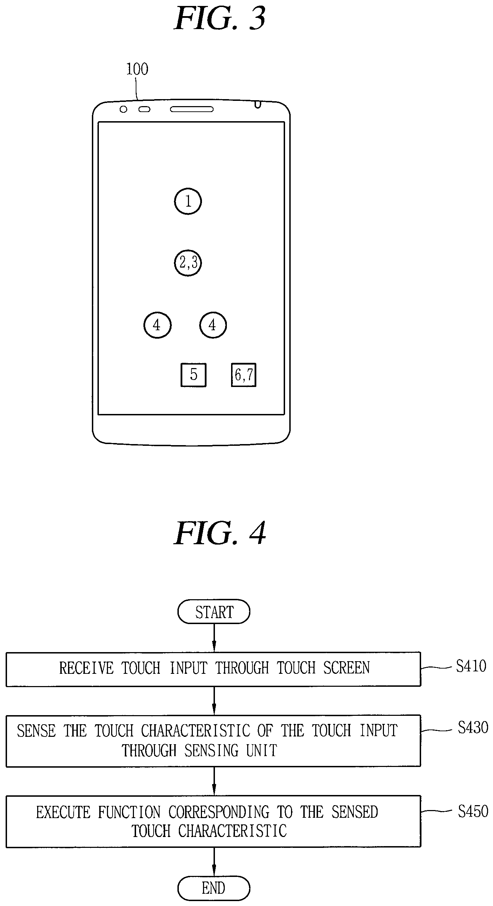

FIG. 2 is a conceptual view for explaining a touch type classified according to a finger portion brought into contact with the touch screen, and FIG. 3 is a conceptual view for explaining a method of classifying a touch input applied to the touch screen 151.

A mobile terminal according to the present disclosure may receive a touch input knocking the touch screen 151. Here, the touch input or touch may denote a gesture knocking the touch screen 151 or making a contact with the touch screen. More specifically, the touch input may be understood as an operation of slightly hitting the touch screen 151 with an object such as a finger or touch pen or an operation of slightly making a contact with the touch screen 151.

An object applying such a touch input may be a thing capable of exerting an external force to the touch screen 151, and for example, may be a hand, a stylus pen, a pen, a pointer, a fist, or the like.

On the other hand, when an external force due to a hand is applied to the touch screen 151, various types of touch inputs may be applied to the touch screen 151 according to various portions constituting the hand. In other words, a touch input received through the touch screen 151 may be received through different portions of the hand.

Referring to FIG. 2, the type of a touch input received through the touch screen 151 may be classified into a touch input for touching with a fingertip (F1), a touch input for touching with a nail (F2), a touch input for touching with a knuckle by bending the finger (F3) and a touch input for touching with a palm (not shown).

The sensing unit 140 or controller 180 may collect various signals being sensed upon receiving a touch input to classify such a touch type. More specifically, the sensing unit 140 may include at least one of an acceleration sensor, a microphone sensor, a touch sensor, a color sensor and a pressure sensor, and the sensing unit 140 or controller 180 may classify the touch type of a touch input applied to the touch screen 151 by comprehensively considering a signal received from the at least one.

The acceleration sensor is a sensor capable of measuring a dynamic force such as an acceleration, a vibration, a shock or the like of the terminal body. The acceleration sensor may sense the movement (or vibration) of the terminal body generated by a touch input to sense whether or not the touch input is applied thereto. The sensing unit 140 or controller 180 may classify a touch type thereof using the movement of the body being sensed in a different manner according to the type of an object applying the touch input.

The touch sensor may sense a touch input using a touch generated on the body. Furthermore, the touch sensor may calculate a position to which the touch input is applied, and the sensing unit 140 or controller 180 may classify a touch type using a touch area sensed from the touch sensor. For example, the sensing unit 140 or controller 180 may determine that it is a touch input due to a nail when the sensed touch area is less than a first reference range, and a touch input due to a fingertip when the sensed touch area is less than a second reference range which is greater than the first reference range.

For another example, the microphone sensor may sense a touch input using a sound generated from the vicinity of the body. Furthermore, the sound has a unique frequency characteristic, and thus the sensing unit 140 or controller 180 may classify a touch type using the frequency characteristic of the received voice information. For example, since the frequency characteristic of a sound generated when a nail hits the touch screen 151 is different from that of a sound generated when a fingertip hits the touch screen 151, the sensing unit 140 or controller 180 may more accurately classify a touch type using voice information received at the microphone sensor.

For still another example, the RGB sensor senses the color of an object that has applied a touch, and the sensing unit 140 or controller 180 may classify the type of an object that has applied a touch using the sensed color.

For yet still another example, the pressure sensor may sense the intensity of a pressure applied to the body, and the sensing unit 140 or controller 180 may classify a touch type using the intensity of the pressure.

In addition, the touch type thereof may be classified using a piezo sensor. Due to a different physical pattern generated according to an object generating a shock to the object, the sensing unit 140 or controller 180 may classify a touch type using an experimentally acquired physical pattern. The experimentally acquired physical pattern may be prepared and stored in the memory 170 during the factory setting, and periodically updated or changed by a user.

On the other hand, when all the sensors are always activated to classify the touch type, battery consumption may be increased in an inefficient manner. Due to the restriction of battery capacity, the sensors are required to be efficiently used. To this end, a mobile terminal according to the present disclosure may sense a first touch input using at least one of a touch sensor and an acceleration sensor, and activate the remaining sensors for a predetermined period of time in response to the first touch input. The sensing unit 140 or controller 180 may comprehensively determine the touch type of second touch input applied within a predetermined period of time using the remaining sensors temporarily activated. For example, when a first touch input is sensed by the acceleration sensor, the remaining sensors including the microphone sensor or the like may be activated to wait for a touch input that will be entered since then. When a second touch input is applied within a predetermined period of time from a time point at which the first touch input is applied, the sensing unit 140 or controller 180 may determine the touch type of the second touch input using signals sensed from the sensors in a comprehensive manner. Meanwhile, when the second touch input is not applied within a predetermined period of time, the remaining sensors excluding the touch sensor and acceleration sensor are switched from an active state to an inactive state. As a result, it may be possible to effectively reduce energy consumed by the sensors.

On the other hand, a mobile terminal according to an embodiment of the present disclosure may include a microcontroller (hereinafter, referred to as "MCU") for controlling the sensors. The MCU may perform the role of a hub of the sensors, and collect signals from the sensors, and classify a touch type using the signals received from the foregoing sensors in a comprehensive manner. Accordingly, the MCU may transfer the signals received from the sensors to the controller 180 or transfer the classified touch type to the controller 180. In other words, the sensing unit 140 may include the MCU or the like to classify the touch type by itself.

Hereinafter, for the sake of convenience of explanation, as illustrated in FIG. 3, the touch type is simplified and expressed in a circular or rectangular shape. A numeral within the shape indicates a sequence in which the touch input is applied, and a position shown with the shape corresponds to a position to which the touch input is applied on the entire region of the touch screen 151. Furthermore, the type of the shape (circular or rectangular shape) indicates a touch type. More specifically, the circular shape denotes a touch input that has applied with a fingertip, and the rectangular shape denotes a touch input that has applied with a nail. For example, referring to FIG. 3, it denotes that total seven touch inputs have been applied to the touch screen 151, and the numeral ① indicates a first touch input applied by one fingertip. The numerals ②,③ denote that touch inputs have been sequentially applied to the same position, and indicate a second and a third touch input applied with a fingertip. The numeral ④ denote a fourth touch input as a multi-touch input applied at the same time with two fingertips. The numeral ⑤ in a rectangular shape denotes a fifth touch input applied with a nail, and the numerals ⑥, ⑦ in a rectangular shape denote that touch inputs are sequentially applied to the same position, and indicate a sixth and a seventh touch input applied with a nail.

Hereinafter, a mobile terminal for executing a different function according to the foregoing touch type and a control method thereof will be described in detail.

FIG. 4 is a flow chart for explaining a control method of a mobile terminal according to an embodiment of the present disclosure.

First, according to a mobile terminal according to the present disclosure, the process of receiving a touch input through the touch screen 151 is carried out. The sensing unit 140 or controller 180 may sense a touch input applied to the touch screen 151.

Next, the process of sensing a touch type of the touch input using the sensing unit 140 is carried out (S430). The sensing unit 140 or controller 180 may determine (or decide, sense) that a touch input applied to the touch screen 151 is applied by which type of object based on signals received from various types of the foregoing sensors. More specifically, the touch type may be classified based on at least one of a vibration characteristic, a sound characteristic, a size of contact area and an intensity of pressure that are sensed when a touch input is applied to the touch screen.

Next, the process of allowing the controller 180 to execute a function corresponding to the sensed touch type is carried out (S450). In other words, upon receiving a preset type of touch input, the controller 180 may control at least one of executable functions on the terminal.

Here, the executable functions on the terminal may denote all types of functions that can be executed or driven in the mobile terminal. For example, one of the executable functions may be an application installed in the mobile terminal. For example, "executing an arbitrary function" may denote "executing or driving an arbitrary application".

For another example, an executable function on the mobile terminal may be a function of generating an event. Here, the generated event may include a message transmission event, a call origination event, a schedule generation event, and the like. Meanwhile, the event may be an event generated from an application installed in the mobile terminal.

For still another example, an executable function on the mobile terminal may be a function required for the fundamental operation of the mobile terminal. For example, a function required for the fundamental operation thereof may include a function of turning on or off the illumination provided in the display unit 151, a function of switching from a released state to a locked state or switching from a locked state to a released state in an opposite manner, a function of setting a communication network, a function of changing the setting information of the mobile terminal, and the like.

On the other hand, even when a preset type of touch input is applied to the same position in the same situation, a different function may be carried out according to the touch type. More specifically, the controller 180 may execute a first function when a touch input is applied with a fingertip, and execute a second function different from the first function when applied with a nail.

On the other hand, the controller 180 may change setting information associated with a currently driven function or a function corresponding to screen information displayed on the display unit among currently driven functions in response to the preset type of touch input. Here, a function controlled by the preset type may vary according to the current status of the mobile terminal and the preset type.

First, considering the status of the mobile terminal in more detail, upon sensing the tap, the controller 180 may perform a different function according to the status of the mobile terminal, namely, a function currently driven on the mobile terminal, a type of screen information currently displayed on the display unit 151, an application corresponding to screen information currently displayed on the display unit 151, an application, an on/off state of the illumination of the display unit 151, a locked/released state of the mobile terminal, and the like.

More specifically, even when the same touch input is sensed, the controller 180 may execute a "voice recognition function" when the illumination of the display unit 151 is off, perform control on an application associated with the currently displayed screen information when the illumination of the display unit 151 is on, or release a locked state and display a home screen page on the touch screen 151 when the currently displayed screen information is the locked screen.

Furthermore, an executable function corresponding to a touch input may be changing the setting of a function currently driven on the mobile terminal, changing the setting of an application associated with screen information displayed on the mobile terminal or changing the setting of a function corresponding to screen information displayed on the mobile terminal.

Next, considering the preset type, the controller 180 may control a different function based on a position to which the touch input is applied, a sequence in which the touch input is applied, or the like.

Here, a preset type of touch input may be set in various ways.

For an example, a preset type of touch input may include a first and a second touch input consecutively knocking a predetermined region of the touch screen 151 within a preset period of time. Such a type of touch input may be referred to as a "knock-knock".

Here, the preset period of time may be a very short period of time, for example, 200 ms to 2 seconds.

Furthermore, the predetermined region may denote a small area in which positions applied with the tap gestures are the same or regarded as the same. To this end, when a first touch input is sensed on the sensing unit 140, the sensing unit 140 calculates a predetermined region from the sensed position. Then, when a second touch input is sensed in the predetermined region within a reference period of time from a time point at which the first touch input is sensed, the sensing unit 140 or controller 180 may determine that a preset type of touch input has been sensed.

The predetermined region as a region adjacent to an edge of the touch screen 151 may be formed in a region displayed with at least one of antenna information, communication mode information, battery information, information on an event that has occurred, information on a function that has been set, and time information. In addition, the predetermined region may be formed in a region in which an object is not displayed within the entire region of the touch screen 151. The object indicates a graphic element with which a preset control function is carried out when a touch input is applied to a region displayed with the object, and for example, an icon, a menu or the like corresponds to the object.

On the other hand, for another example of the preset type of touch input, the preset type of touch input may include a plurality of touch inputs matching a preset pattern. More specifically, the preset type of touch input may include a plurality of touch inputs for sequentially touching at least one region according to the preset pattern within a virtual regions partitioned on the touch screen 151 based on a preset sequence. Such a type of touch input may be referred to as a "knock-code".

The preset pattern may be defined by sequentially connecting positions at which a plurality of touch inputs are sensed according to a sequence, and denote a preset pattern set by a user to release the locked state.

On the other hand, at least one of the position and size of virtual regions to which a plurality of touch inputs are applied varies based on a touch position at which the plurality of touch inputs are sensed. For example, at least one region of the touch screen 151 may include a first, a second, a third and a fourth virtual region, and at least one of the position and size of the first, the second, the third and the fourth virtual region may vary according to the sensed plurality of touch inputs. The first, the second, the third and the fourth region may correspond to different numerals, respectively, and the different numerals may be given in a sequence from the left to the right or from the top to the down based on the positions disposed with the first, the second, the third and the fourth region.

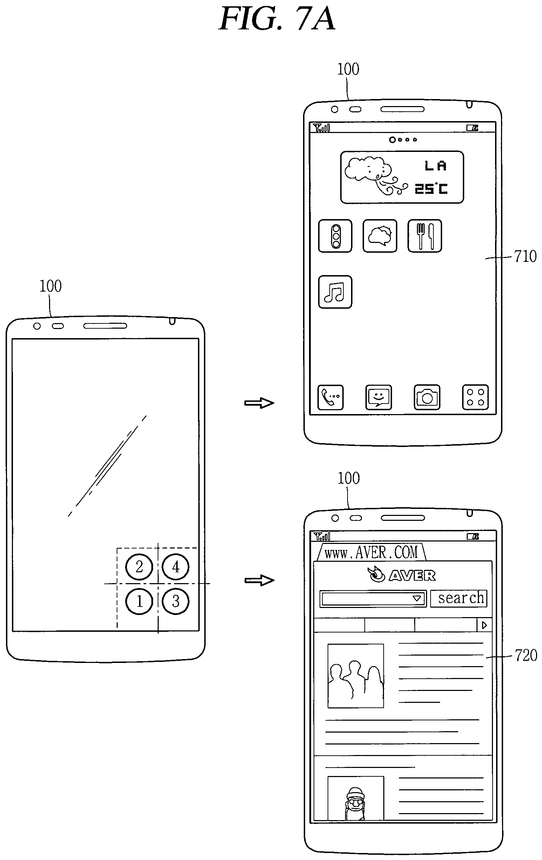

For example, a "knock-code" for releasing a locked state may be configured with four touch inputs, and their touch points may be set to sequentially form a vertex of alphabet capital letter "N". As illustrated in FIG. 7A, when a first through a fourth touch input ①, ②, ③, ④) are sequentially sensed on a third quadrant → a first quadrant → a fourth quadrant → a second quadrant, the controller 180 may determine that a 'knock-code" matching a preset pattern has been entered. When a "knock-code" is applied to the touch screen 151 in an inactive state, the controller 180 releases a locked state, and switches an inactive state to an active state, and displays preset screen information on the touch screen 151.

When a "knock-code" is received in a locked state, the controller 180 may display an execution screen having a different function based on the touch type of a plurality of touch inputs, respectively, constituting the knock-code. For example, the controller 180 may display a first execution screen when the last one of a plurality of touch inputs constituting the knock-code is applied with a fingertip, and display a second execution screen when the last touch input is applied with a nail.

On the other hand, when a "knock-code" is receive in a non-locked state (or released state), the controller 180 may switch the released state to the locked state, and switch the touch screen to an inactive state.

For another example of the preset type of touch input, the preset type of touch input may be configured with one touch input to an object displayed on the touch screen. The object may denote a graphic element such as an application icon, a widget or the like, formed to execute a preset control function in response to a touch input. In general, when a touch input is applied to the object, a function linked with the object may be carried out, but according to a mobile terminal according to the present disclosure, a different function may be carried out according to the touch type.

Hereinafter, a method of controlling a mobile terminal according to the foregoing control method illustrated in FIG. 4 will be described in more detail with reference to the accompanying drawings.

First, an operation in case where a preset type of touch input includes a first and a second touch input consecutively knocking a predetermined region of the touch screen within a reference period of time (or when a "knock-knock" is received) will be described.

A mobile terminal according to the present disclosure may sense a touch input applied to the touch screen 151 even when the touch screen 151 is in an inactive state.

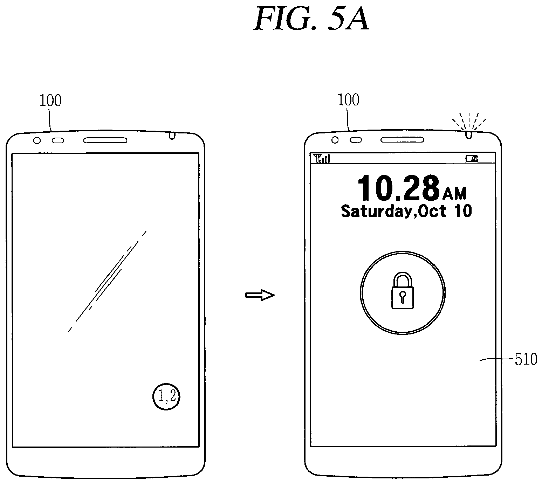

Here, the "touch screen 151 in an inactive state" denotes a state in which the illumination provided therein to illuminate the touch screen 151 is off. For example, as illustrated in FIG. 5A, any information or graphic image is not displayed on the display unit 151 while the touch screen 151 is in an inactive state.

On the contrary, the "display unit 151 in an active state" may denote a state in which the illumination provided therein to illuminate the touch screen 151 is on. A different screen information may be displayed on the display unit 151 according to the control of the controller 180 while the touch screen 151 is in an inactive state. Though not shown in the drawing, when the display unit 151 is activated in a locked state, the controller 180 displays a locked screen associated with the input of password information to receive the password for releasing the locked state from the user.

When the touch screen 151 is in an inactive state, a touch input applied to the touch screen 151 in an inactive state is ignored to prevent the terminal from being malfunctioned by the user's unintentional touch input. However, when a preset type of touch input is received on the touch screen 151 in an inactive state, the controller 180 may execute a function corresponding to the preset type of touch input.

For example, when a "knock-knock" is applied while the touch screen 151 is in an inactive state, the controller 180 may execute a different function according to the type (or touch type) of an object to which the "knock-knock" is applied.

As illustrated in FIG. 5A, when the "knock-knock" is applied with a fingertip, the controller 180 may switch the touch screen 151 in an inactive state to an active state, and display a locked screen 510 formed to release the locked state of the touch screen 151. When a user input unit formed switch the touch screen 151 from an inactive state to an active state is disposed on a rear surface or lateral surface, contrary to the touch screen 151 disposed on a front surface, the user may activate the touch screen 151 in a convenient manner using a "tocktock" rather than the user input unit.

Here, the locked screen, as a screen formed to block or limit the exposure of a specific screen (for example, standby screen, home screen page, etc.) or another image, is formed to receive a user input for releasing the locked state.

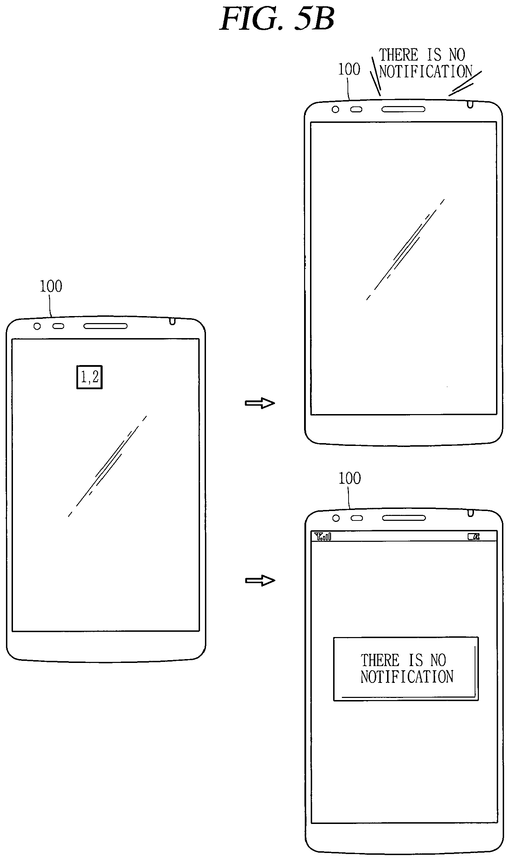

On the other hand, when "tocktock" is applied with a nail, the controller 180 may guide information associated with an event generated from at least one application to the user using at least one of visual, auditory and tactile schemes. More specifically, the controller 180 may guide information associated with the event through the audio output unit 152 while maintaining the inactive state of the touch screen 151 or switch the touch screen 151 to an active state to display information associated with the event on the touch screen 151. As illustrated in FIG. 5B, when there is no event that has been generated, the controller 180 may output auditory information such as "there is no notification" through the audio output unit 152 or display visual information through the touch screen 151.

As a concept including a widget or home launcher, the application denotes every type of program that can be driven in the terminal. Accordingly, the application may be a program for performing a function of web browser, video play, message transmission and reception, schedule management, application update, or the like.

The generation of the event may be a case where there is a missed call, a case where there is an application subject to update, a case where a message has arrived, charging, power-on, power-off of the terminal, a LCD awake key, an alarm, an incoming call, a missed notification, a weather notification, a stock index notification, and the like.

For another example, when specific information is received through the wireless communication unit of the terminal, an event has been generated from an application associated with the specific information, and the controller senses the event. Otherwise, when there is an item entered by the user on the schedule management, an event will be generated from the schedule management application when it becomes a date corresponding to the item.

When a "knock-knock" is applied with a nail, the controller 180 may output information associated with an event generated from at least one application during his or her absence in various ways, and thus the user can check the information associated with the event with a simple method.

On the other hand, when a "knock-knock" is applied while the touch screen 151 is in an active state, the controller 180 may execute a different function according to the type (touch type) of an object that has applied the "knock-knock".

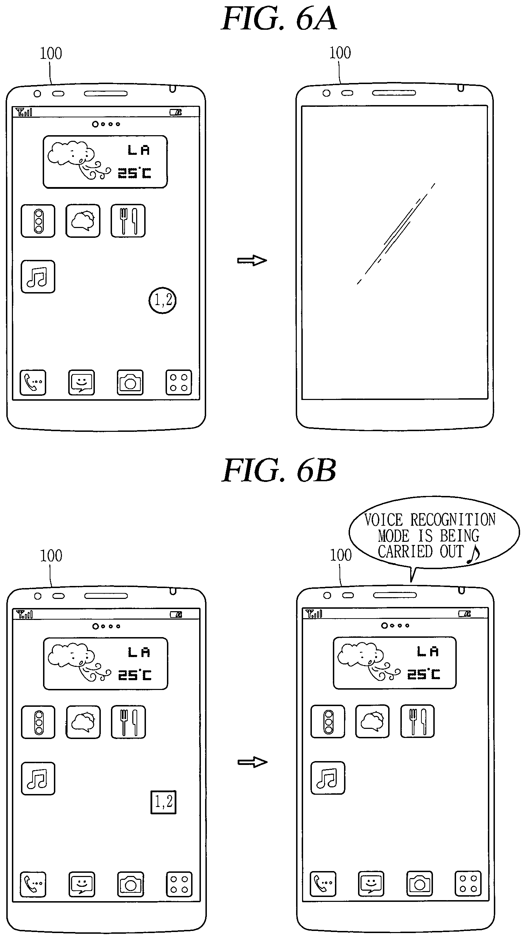

An execution screen, a standby screen, a locked screen or the like corresponding to one or more functions may be displayed on the touch screen 151 in an active state. For example, as illustrated in FIG. 6A, a home screen page may be displayed on the touch screen 151. The screen page may include at least one object, and the object may be an icon or widget of an application installed in the mobile terminal.

In this manner, when a "knock-knock" due to a fingertip is sensed while screen information is displayed on the touch screen 151, the controller 180 may switch the touch screen 151 from an active state to an inactive state. Moreover, if the one or more functions have been executed on the mobile terminal upon applying a "knock-knock", then the controller 180 may terminate at least one of the functions.

The controller 180 may switch the touch screen 151 in an active state to an inactive state only when a "knock-knock" due to a fingertip is applied to a predetermined region in which an object is not displayed. It is because a control function linked with an object should be carried out when a touch input is applied to the object.

On the other hand, as illustrated in FIG. 6B, when a "knock-knock" due to a nail is sensed on the touch screen 151 in an active state, the controller 180 may execute a voice recognition function for receiving a voice command. In other words, the controller 180 may activate a microphone to receive a voice command in response to the "knock-knock" due to the nail. Then, the controller 180 may analyzes a voice received at the microphone to extract a voice command, and execute a function corresponding to the extracted voice command.

On the other hand, the controller 180 may display different screen information on the touch screen 151 according to the type (or touch type) of an object that has applied a "knock-code". More specifically, when a "knock-code" is received on the touch screen 151 in an inactive state, the controller 180 releases a locked state, and switches the touch screen 151 from an inactive state to an active state. Here, screen information displayed on the touch screen 151 that has been switched to an active state may vary according to the type of an object that has applies the "knock-code".

For example, as illustrated in FIG. 7A, when a "knock-code" due to a fingertip is sensed, a home screen page 710 or an execution screen 720 of the most recently executed function may be displayed on the touch screen 151.

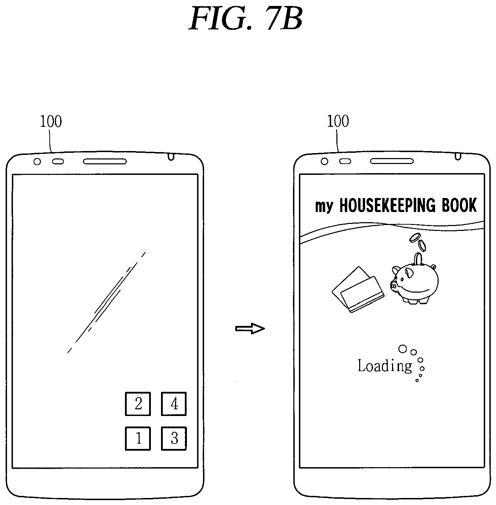

On the contrary, as illustrated in FIG. 7b, when a "knock-code" due to a nail is sensed, a private home screen page in which only a specific user can access or an execution screen of a private function such as a housekeeping book may be displayed on the touch screen 151.

Here, a private home screen page denotes a home screen page in which only a specific user can access in order to protect the user's privacy. The private home screen page may include contents, application icons or the like in which only a specific user can access. The contents and the application icons may be items stored in a private folder by the user's manipulation.

On the other hand, screen information displayed on the touch screen 151 when the locked state is released in response to a "knock-code" due to a nail may be changed by the user. In other words, the user may set a function carried out when the locked state is released by a "knock-code" due to a nail. For example, the foregoing private home screen page or a preview screen on which an image captured by the camera is displayed in real time may be set by the user, and displayed on the touch screen 151 when the locked state is released with a "knock-code" due to a nail.

On the other hand, according to a mobile terminal according to the present disclosure may create a complicated password according to whether or not a plurality of touch inputs forming a "knock-code", respectively, is applied by which type of object.

As illustrated in FIG. 7A, a "knock-code" may be configured with four touch inputs, and their touch points may be set to sequentially form a vertex of alphabet capital letter "N". Moreover, it may be additionally set whether the four touch inputs are applied with a nail or applied with a fingertip, respectively.

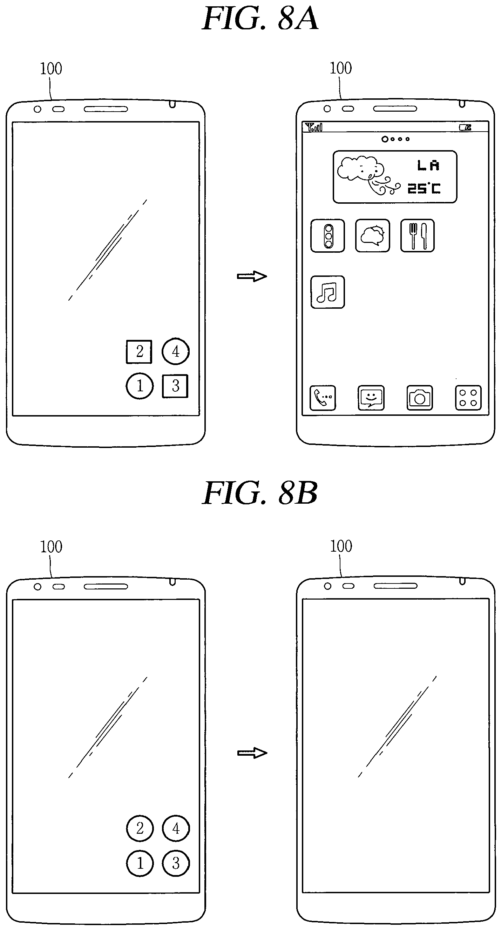

For example, only when a first through a fourth touch input are sequentially sensed on a third quadrant → a first quadrant → a fourth quadrant → a second quadrant, and the first and the fourth touch inputs are applied with a fingertip and the second and the third touch inputs are applied with a nail as illustrated in FIG. 8A, the controller 180 may determine that a 'knock-code" matching a preset pattern has been entered.

On the contrary, when a first through a fourth touch input due to a fingertip are sequentially sensed on a third quadrant → a first quadrant → a fourth quadrant → a second quadrant as illustrated in FIG. 8B, and it does not match a preset pattern, and thus the touch screen 151 maintains an inactive state, and also maintains a locked state.

A pattern set by the user may be subdivided according to the touch type to release the locked state, thereby increasing the security of the mobile terminal.

On the other hand, the mobile terminal 100 according to the present disclosure may further include an optical output unit, and display a different color according to the touch type of a touch input applied to the touch screen 151 using the optical output unit. More specifically, the controller 180 may control the optical output unit to emit light corresponding to a first color when a touch input due to the fingertip is applied to the touch screen, and control the optical output unit to emit light corresponding to a second color different from the first color when a touch input due to a nail is applied to the touch screen. It is to guide the user as to which type of touch is applied to the touch screen 151.

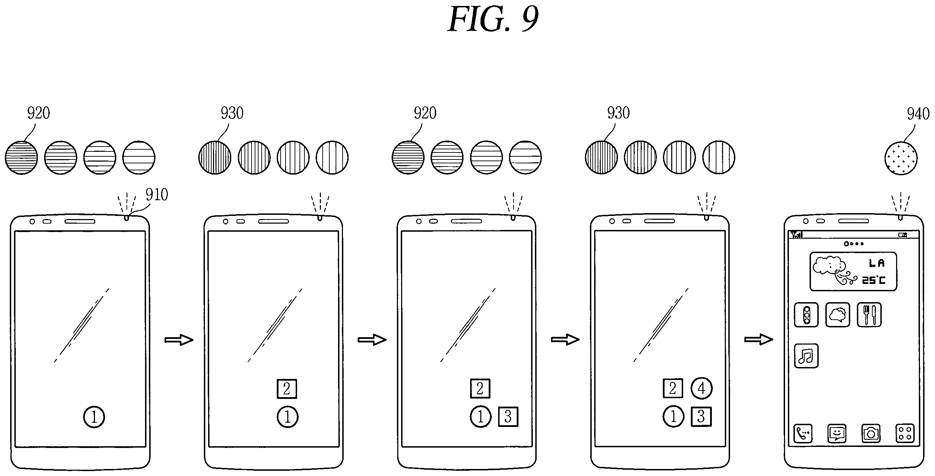

For example, when a touch input is applied to the touch screen 151 in an inactive state as illustrated in FIG. 9, the controller 180 may control the optical output unit 910 disposed on a front surface of the terminal to display lights 920, 930, 940 corresponding to different colors according to the type of an object that has applies the touch input.

First, referring to FIG. 9, the controller 180 may display a first color 920 through the optical output unit 910 in response to a first touch input applied with a fingertip. Here, the optical output unit 910 may gradually adjust the brightness of the first color. Through this, the user may recognize which type of touch has been applied to the touch screen 151, and a period of time remaining until a second touch input is entered.

Then, when a second touch input applied with a nail is sensed within a predetermined period of time from a time point at which a first touch input is applied, the optical output unit 910 may display a second color 930 different from the first color 920.

When a plurality of touch inputs match a preset pattern, the controller 180 may release a locked state, and switch the touch screen from an inactive state to an active state to display preset screen information. In addition, the optical output unit 910 may display a third color 940 different from the first and the second color to guide that the plurality of touch inputs have matched a preset pattern.

On the other hand, when a plurality of touch inputs do not match a preset pattern, the optical output unit 910 may display a fourth color (not shown), and maintain the locked state and the inactive state of the touch screen 151.

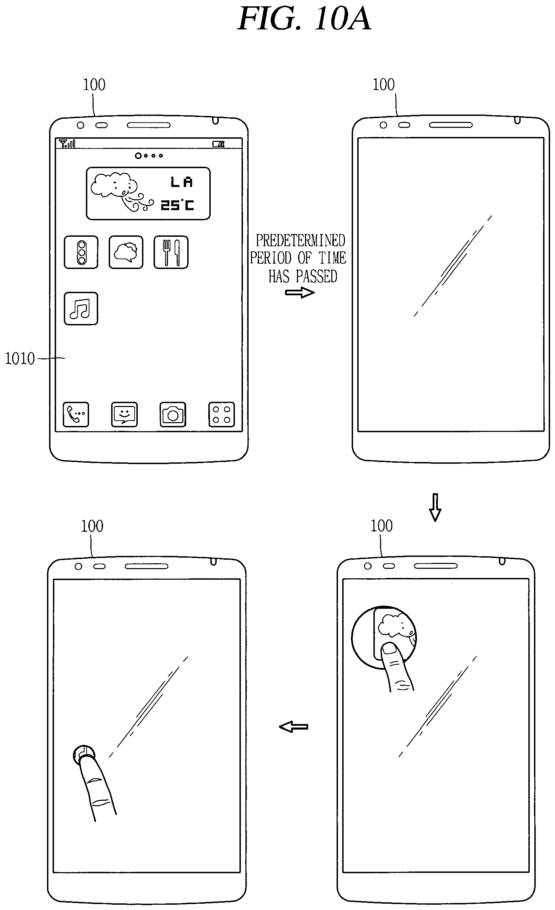

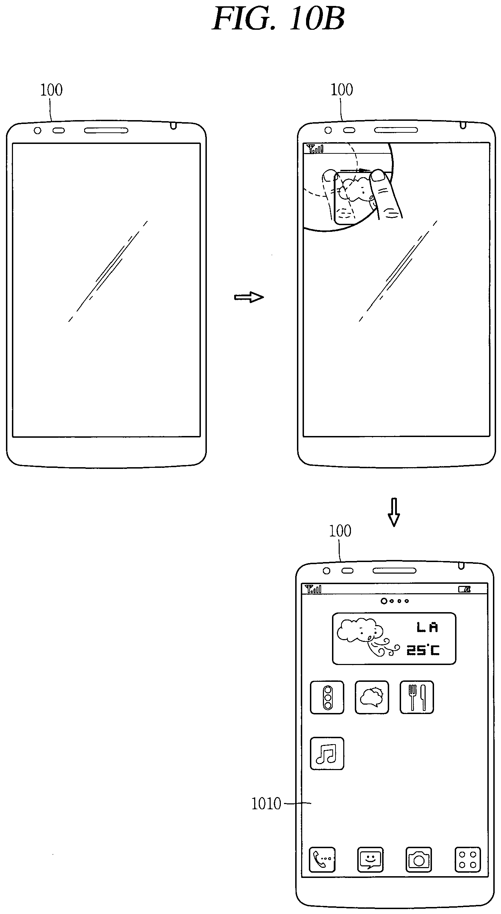

FIGS. 10A and 10B are conceptual views for explaining an embodiment of executing different functions according to the touch type of a touch input applied to the touch screen in an inactive state.

The mobile terminal 100 may display screen information on the touch screen 151. Here, the screen information is a graphic image that can be displayed on the touch screen 151, and irregardless of the type thereof. For example, the screen information may be an execution screen of an application, and may be an electronic document screen, a music play screen, a contacts screen, or a home screen page 1010 as illustrated in FIG. 10A.

When a locked state is executed by the user's control or locked state execution setting while displaying the screen information, the screen information that has been displayed on the touch screen 151 during the execution of the locked state is stored in the memory 170. In other words, the screen information stored in the memory 170 may be screen information when the locked state is executed.

When the user input unit 123 configured to control switching to a locked state is pressed by the user while displaying the screen information, the mobile terminal 100 is switched to a locked state. The locked state is a state in which a control command due to a touch input is restricted.

On the other hand, when there is no touch input for a preset period of time (or when a predetermined period of time has passed) on the touch screen 151, the controller 180 may switch the touch screen to a locked state, thereby preventing an unintentional touch input from being entered while the touch screen 151 is in an active state.

A touch input may be applied to the touch screen 151 in an inactive state while the touch screen 151 is switched to the inactive state. In this case, the controller 180 may switch one region of the touch screen 151 from an inactive state to an active state, and display part of screen information on the switched one region. In other words, a partial region to which a touch input is applied may be activated to display part of screen information stored in the memory 170, and maintain an inactive state in the remaining region excluding the partial region. As a result, the user may quickly check information desired to be checked even without activating the entire region of the touch screen.

On the other hand, the size of the partial region may be differently formed according to the touch type. For example, when the touch input is applied with a fingertip, it may be implemented to be slightly larger than the size of an adult index fingertip. On the contrary, when applied with a nail, it may be implemented to be slightly larger than the size of a nail.

The partial region may be formed with a circle extended by the same length on the basis of the touched position, but may not be necessarily limited to this. In other words, it may be formed in various shapes, such as a triangle, a square, a star shape, a droplet shape, a person's outline, and the like.

According to the present disclosure, since the size of a partial region displayed with screen information varies according to a touch type, the user may vary the touch type according to the situation, thereby preventing the information from being leaked to the third party.

The partial region displayed with part of the screen information may be formed to feel a perspective. In other words, part of the screen information may be displayed to be seen in a protruded manner from the remaining region maintaining an inactive state. For example, the partial region may be formed in a droplet shape, and displayed such that part of the screen information is projected on the droplet. Accordingly, the user may feel an aesthetic sense such as forming a droplet when touching the touch screen 151.

On the other hand, when a plurality of touch inputs constituting a "knock-code" is applied, a partial region displayed with screen information may be differently formed according to the touch type and touch position of the touch inputs. The user may check whether or not the "knock-code" is accurately entered through the partial region displayed with screen information.

On the other hand, as illustrated in FIG. 10B, when a touch input consecutively moves without being released, the partial region displayed with part of the screen information may be extended. For example, when the touch input consecutively moves in a direction of being away from an initialled sensed position, the partial region is extended in the moving direction. In other words, the controller 180 may extend a range displayed with part of the screen information based on the movement of the touch input. On the contrary, when the touch input moves in a direction of being closer to an initialled sensed position, the size of the switched region is reduced again. In other words, the size of the partial region may be adjusted.

On the other hand, when the movement of the touch input corresponds to a preset scheme in a state that part of the screen information is displayed on the touch screen 151, the controller 180 may release the locked state, and display the whole of the screen information in the entire region of the touch screen 151. Here, the preset scheme denotes a mode in which a touch input consecutively moves from an initially sensed position to be released from a position located farther than a preset distance. When released from a position located closer than the preset distance, screen information that has been displayed in the partial region disappears, and the entire region of the touch screen 151 is deactivated. In other words, the controller 180 terminates the display of the screen information.

Though not shown in the drawing, when a touch input is applied in a state that a locked screen is displayed on the touch screen 151, the partial region in which a touch input is applied may display part of screen information stored in the memory 170, and the remaining region excluding the partial region may display the locked screen.

On the other hand, a mobile terminal according to the present disclosure may execute a different function according to the touch type of a touch input applied to an object. In general, when a touch input is applied to an object, a control function corresponding to the object is carried out. However, according to the present disclosure, a different control function according to the touch type may be carried out. Hereinafter, the operation of a mobile terminal for executing a different function according to the touch type of a touch input applied to an object will be described in detail.

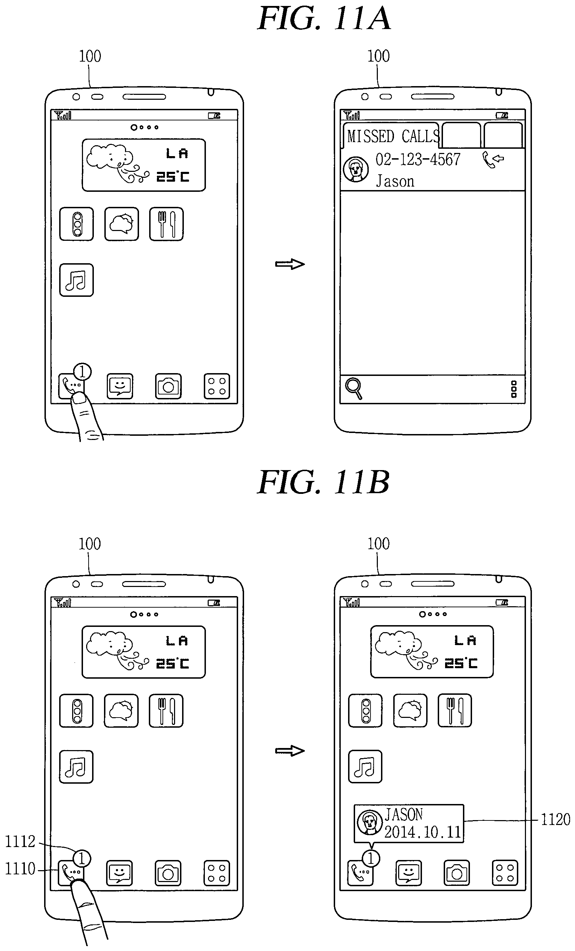

FIGS. 11A through 15 are conceptual views for explaining an embodiment of executing different functions according to the touch type of a touch input applied to an object.

For an example of different functions, referring to FIGS. 11A and 11B, a home screen page may be displayed on the touch screen 151. The home screen page may include at least one object, and the object may be an icon or widget of an application installed in the mobile terminal. However, a home screen page being displayed on the touch screen 151 merely illustrates an example, and a graphic user interface (GUI) of a currently executed application may be displayed on the touch screen 151, and the touch screen 151 may include an object formed to execute a preset application.

Here, when a touch input to at least one object is sensed, the controller 180 may execute a different function according to the type (or touch type) of an object that has applied the touch input. More specifically, when a touch input due to a fingertip is applied to the object, the controller 180 may execute an application linked with the object, and display an execution screen of the application in at least one region of the touch screen 151. On the contrary, when a touch input due to a nail is applied to the object, the controller 180 may display information associated with an event generated from the application or contents associated with the application in at least one region of the touch screen.

A case of applying a touch input due to a nail to the object will be described in more detail.

As described above, when a "knock-knock" due to a nail is applied to a predetermined region of the touch screen 151, the controller 180 may guide information associated with an event generated from at least one application to the user using at least one of visual, auditory and tactile schemes.

When a touch input due to a nail is applied to any one object, the controller 180 displays information associated with an event generated from an application linked with the object.

Here, the controller 180 may display information associated with the information in a partial region of the touch screen 151. For example, when a touch input applied to the object is formed with a nail, the entire region of the touch screen 151 may be partitioned into a first portion and a second portion, and information associated with an event generated from the application is displayed in the first portion, and a screen that has been displayed in the entire region prior to applying a touch input may be continuously displayed in the second portion.

For such an example, FIGS. 11A and 11B illustrate a case where an application associated with a call is carried out. An object 1110 formed to execute an application acoustic sensor the call is displayed on a home screen page, and when there is a missed call event, the object 1110 may include guide information 1112 for guiding a number of occurrences of an event.

As illustrated in FIG. 11A, when a touch input due to a fingertip (F1) is applied to the object, an execution screen 1120 of the application associated with a call is displayed on the touch screen 151.

On the other hand, as illustrated in FIG. 11B, when a touch input due to a nail (F2) is applied to the object, the controller 180 may display information 1130 associated with the event in the first portion.

The controller 180 may control information 1130 associated with the event based on a touch input applied to the first portion in a state that the information 1130 associated with the event is displayed in the first portion. More specifically, when a touch input due to a nail is applied to the first portion, the controller 180 may change screen information displayed in the first portion to another screen information. For example, in a situation that a first through a third event are sequentially generated, information associated with the most recently generated third event may be displayed in the first portion. Then, when a touch input due to a nail is applied to a first position of the first portion and moved to a second position without being released, information associated with the first event or the second event may be displayed in the first portion instead of information associated with the first event based on a moving direction thereof.

In addition, the controller 180 may convert text information associated with the event to voice information (text to speech, TTS) in response to a touch input due to the nail (F2), and output the voice information through the audio output unit 152. As a result, the user may be guided by information associated with an event generated from a specific application using a voice in a simple method.

On the other hand, when another application is driven in a state that information associated with the event is displayed in the first portion, an execution screen of the another application may be displayed in the second portion. The controller senses a control command associated with information displayed in the second portion using a touch input applied to the second portion. In other words, screen information displayed in the second portion may be changed by a touch input applied to the second portion in a state that information associated with the event is displayed in the first portion. In a similar manner, screen information displayed in the first portion may be changed by a touch input applied to the first portion in a state that a specific screen is displayed in the second portion.

On the other hand, when an update of an application is included in information associated with an event, information displayed on the touch screen may include an execution button of update. The user may make a touch to the execution button to perform an update in a simple manner.

According to the present illustration, a drawback in which an application should be carried out to check an event in a terminal in the related art may be solved. In other words, the relevant application may not be carried out to check the event, and information associated with the event may be checked while maintaining a home screen page. Furthermore, the user may check all the contents though "read" or "acknowledged" is not checked in a messenger application or mail application.

On the other hand, among applications, there exists an application from which an event is not generated. For a representative example, there is a photo application in which images and videos stored in the memory 170 are displayed in a list form. In this case, information associated with an event may be substituted by contents associated with an application. In other words, for an application from which no event is generated, when a touch input due to a nail is applied to an object of the application, the controller 180 may display contents associated with the application in the first portion. For example, contents associated with the photo application may be the mostly recently stored photos or photos most recently displayed on the touch screen 151.

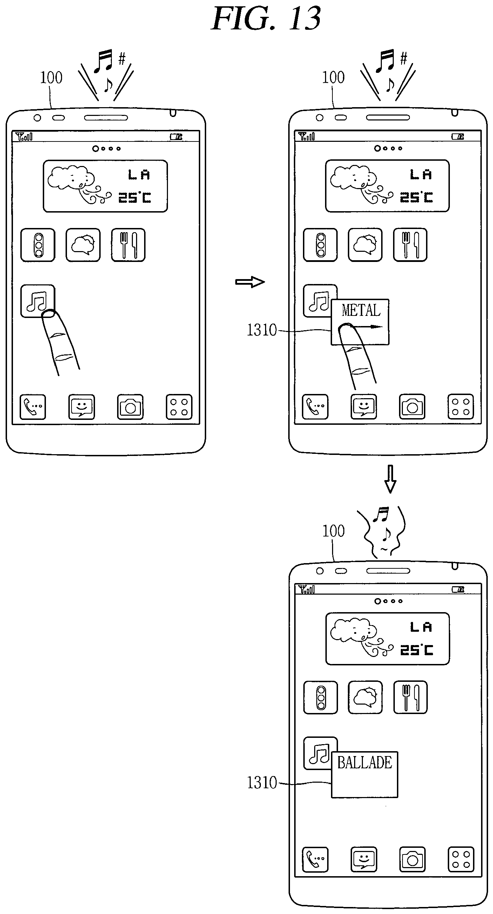

Considering a specific example, when the user makes a touch to an icon of any application on a home screen page as illustrated in FIG. 13A, contents associated with the application (or information associated with an event) is displayed in the first portion 1210. The remaining portion excluding the first portion 1210 within the entire region of the touch screen 151 is set to a second portion.

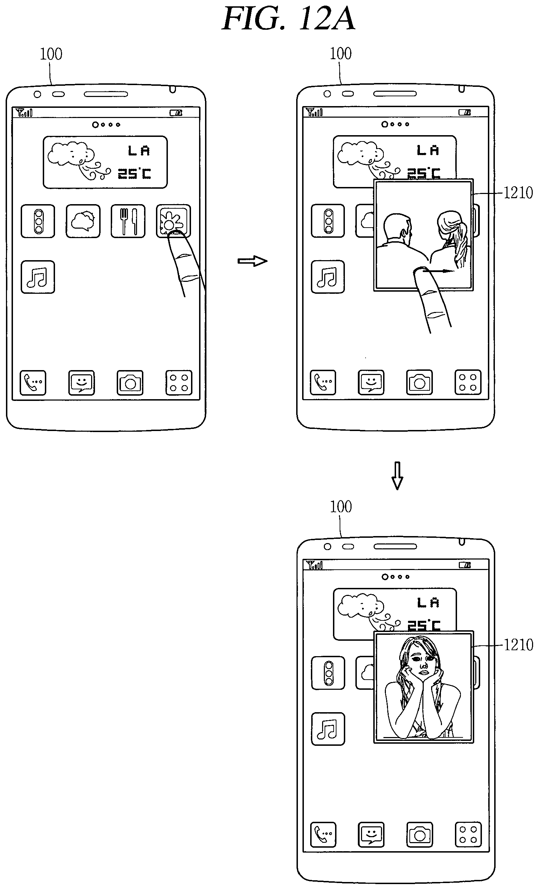

For such an example, FIG. 12A illustrates a case of executing a photo application, and an image most recently stored therein or an image most recently displayed on the touch screen 151 is displayed in the first portion 1210. The user may apply a touch to the first portion using a nail, thereby changing an image displayed in the first portion. For example, the controller 180 may display an previous or next image according to a dragging direction in the first portion 1210 in response to a dragging input using a nail.

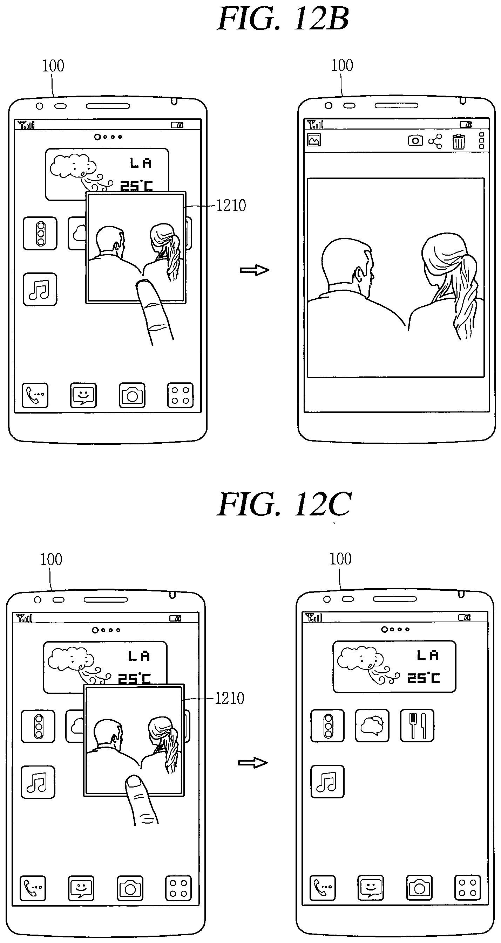

On the other hand, when a touch input due to a nail is applied to the first portion 1210 in a state that contents is displayed in the first portion 1210, the controller 180 may execute an application. In this case, as illustrated in FIG. 12B, contents that has been displayed in the first portion 1210 may be displayed on an execution screen of the application. The user may visually check the relevant contents in a state the application is not carried out, and execute the relevant application when required to perform a function associated with a specific content.

On the other hand, the user may apply a touch to the first portion 1210 using a fingertip, thereby changing at least one of the location and size of the first portion 1210 as well as terminating the display of the first portion 1210 as illustrated in FIG. 12C. For example, when a touch input due to a fingertip is applied to the first portion 1210, the controller 180 may terminate the display of the first portion and control the first portion not to be displayed on the touch screen 151.

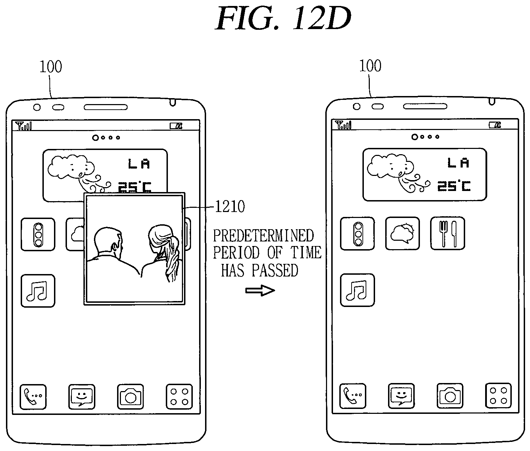

On the other hand, when a touch input is not applied for a predetermined period of time in a state that contents is not displayed in the first portion 1210, the controller 180 may terminate the display of the first portion and control the first portion not to be displayed on the touch screen 151 as illustrated in FIG. 12D.

FIG. 13 illustrates a case of executing a music play application. When the user makes a touch to a music play icon with a nail, content information currently being played is displayed in the first portion. The content information may include a content creator's name, a creation date, a content title, an album jacket, and the like. When a dragging input due to a nail is applied to the first portion 1310 while displaying content information currently being played in the first portion 1310, the next/previous content will be played. Next/previous content information is displayed in the first portion when the next/previous content is played.

However, the present disclosure may not be necessarily limited to this, and for example, when a dragging input due to a nail is applied to the first portion, the played content may not be changed. Specifically, content currently being played may be reproduced with no stop or next/previous content information may be displayed in the first portion. In this case, a control command for the next/previous content may be either one of touch inputs due to a double tap or nail to the first portion.

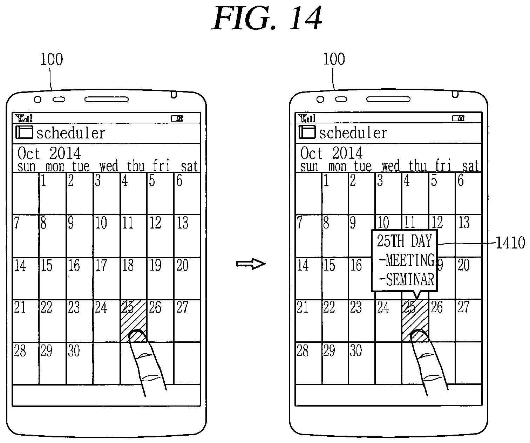

FIG. 14 illustrates a case of executing a schedule management application. When the schedule management application is carried out, a time table based on at least one of day, week, month and year is displayed. When a specific time (or specific date) is selected by a touch input due to a fingertip, the controller 180 displays information associated with the selected specific time instead of the time table.

On the other hand, when the specific time is selected by a touch input due to a nail, the controller 180 may classify the touch screen into a first portion 1410 and a second portion different from the first portion, and display information associated with the specific time in the first portion 1410, and continuously display the time table in the second portion. As a result, the user may check information associated with a specific time while maintaining screen information as it is that has been displayed prior to entering a touch input. Meanwhile, when a touch input due to the nail is released, the controller 180 may terminate the display of the first portion, and control the first portion not to be displayed on the touch screen 151.

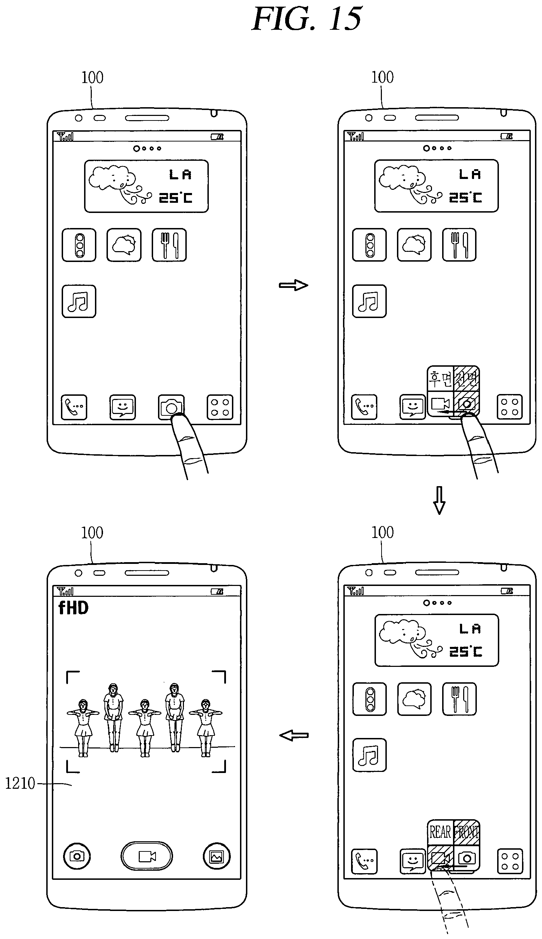

Referring to FIG. 15, the user may apply a touch input using a nail to an object to change a setting value of an application associated with the object.

For example, an execution icon 1210 of a camera application may be displayed on the touch screen 151. The camera application is an application formed to activate a camera to display an image captured on the camera in real time as a preview screen. When a touch input is applied to the execution icon 1210, the controller 180 may execute a different function according to an object (or touch type) that has applied the touch input.

More specifically, when the touch input is formed with a fingertip, the preview screen is displayed. On the contrary, when formed with a nail, menus (or images) formed to change a setting value associated with the camera application are displayed in at least one region of the touch screen 151. The setting value may include a rear/front camera activation, a photo/video capture mode, and the like. Here, a preset setting value may be highlighted to be distinguished from a value that has not been set.

On the other hand, when the touch input is continuously moved without being released while displaying the menus (or images), the setting value may be changed. According to a specific example, when the touch input is moved to a menu (or image) corresponding to a video capture mode while a photo capture mode is selected, the setting value may be changed from the photo capture mode to the video capture mode.

On the other hand, the menus (or images) may be displayed on the touch screen 151 only when a touch input due to a fingertip is maintained without being released. In other words, when the touch input is released, the display of the menus (or images) may be terminated. Moreover, when the touch input is released, the controller 180 may execute the camera application based on the setting value, and display the preview screen 1210 on the touch screen 151. The user may immediately start capturing using a camera set to his or her desired setting value.

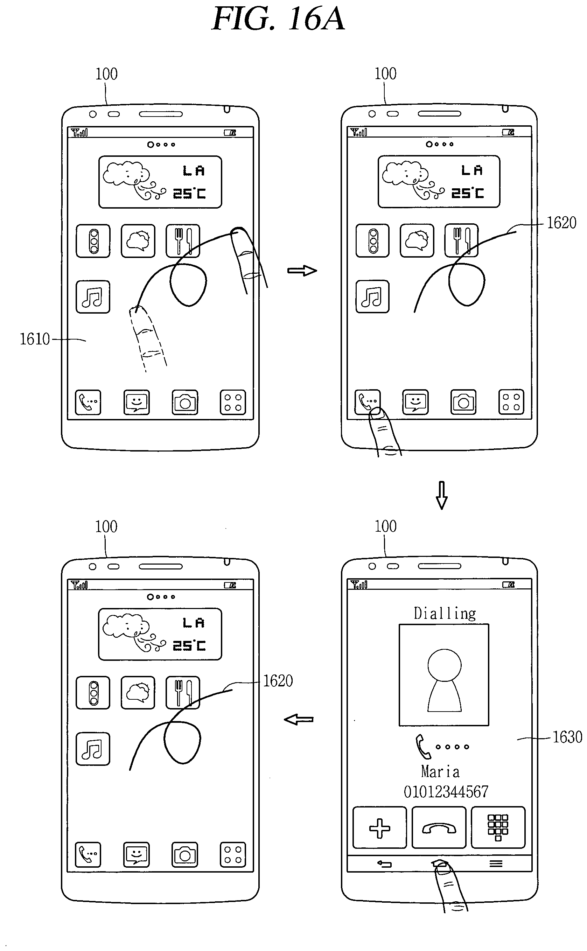

FIGS. 16A through 20B are conceptual views for explaining the operation of a mobile terminal when a dragging input due to a nail is applied.

A mobile terminal according to the present disclosure may sense a dragging input in which a touch input due to a nail is consecutively moved from a first position to a second position. A dragging input due to a nail is distinguished from a dragging input due to a fingertip, and the controller 180 may execute a different function according to the type of a dragging input.

Furthermore, there may be various functions executed in response to a dragging input due to a nail, and the controller 180 may execute a different function according to a location to which the dragging input is applied and screen information displayed on the touch screen 151 upon entering the dragging input.

For example, as illustrated in FIG. 16A, a touch input due to a nail may be applied to a region in which the object is not displayed while displaying a home screen page 1610. Then, when the touch input is consecutively moved, the controller 180 may display an image 1620 formed along a trajectory of the dragging input on the home screen page 1610. In other words, a memo may be created on the home screen page 1610. As a result, the user may create a memo only with a dragging input due to a nail without executing an additional application.

On the other hand, when a memo is created with a dragging input due to a nail, a memo write mode may be carried out for a predetermined period of time. When the memo write mode is carried out, a memo is created even with a touch input due to a fingertip. At this time, the controller 180 may adjust the size (or thickness of text) created according to the touch type. For example, a memo with a first size may be created when a touch input due to a nail is applied in a state that the memo write mode is carried out, and a memo with a second size may be created when a touch input due to a nail is applied.

On the other hand, unless a touch input is applied for the predetermined period of time, the memo write mode is automatically terminated.

Unless the memo created on a home screen page is deleted by the user, the memo may be displayed along with the home screen page. Specifically, as a call application is carried out, an execution screen 1630 instead of the home screen page 1610 is displayed. Then, when the home screen page is displayed again on the touch screen 151, a memo created by the dragging input is displayed on the home screen page.

The user may knock a vacant space in which an object is not displayed on the home screen page, thereby allowing the display of the memo to disappear or appear. For example, when a touch input due to a nail is applied to a vacant space in a state that the memo is displayed, the controller 180 controls the memo not to be displayed thereon. On the contrary, when a touch input due to a nail is applied to a vacant space in a state that the memo is not displayed, the memo is displayed thereon.

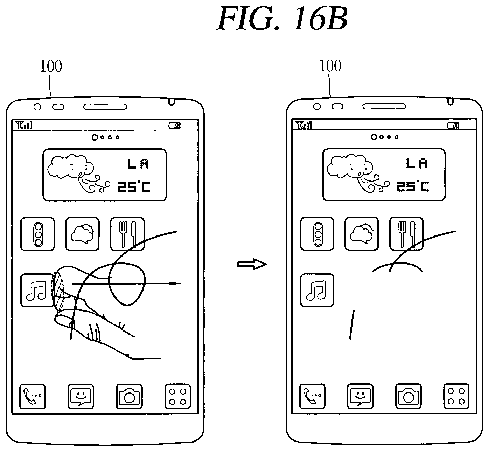

On the other hand, as illustrated in FIG. 16B, when a touch input for making a touch to the touch screen with a knuckle is applied in a state that the memo is displayed, a memo that has been displayed on a trajectory along which the knuckle has moved will be terminated. In other words, the user may delete at least part of a memo created with the dragging input using the knuckle.

On the other hand, when a dragging input moving from an end to another end is applied, a different function may be carried out according to the touch type.

When a touch input due to a fingertip is consecutively moved from an end of the touch screen 151 to the other end thereof, at least part of curtain window formed to change a setting value associated with the mobile terminal may be displayed. The status information of the mobile terminal may be displayed on the curtain window. The status information may include battery capacity information, current time information, vibration mode information, data communication status information, reception sensitivity information, and the like.

On the contrary, when a touch input due to a nail is consecutively moved from an end of the touch screen 151 to the other end thereof, the controller 180 may partition the touch screen 151 into a plurality of regions, and display different screen information based on the touch input.

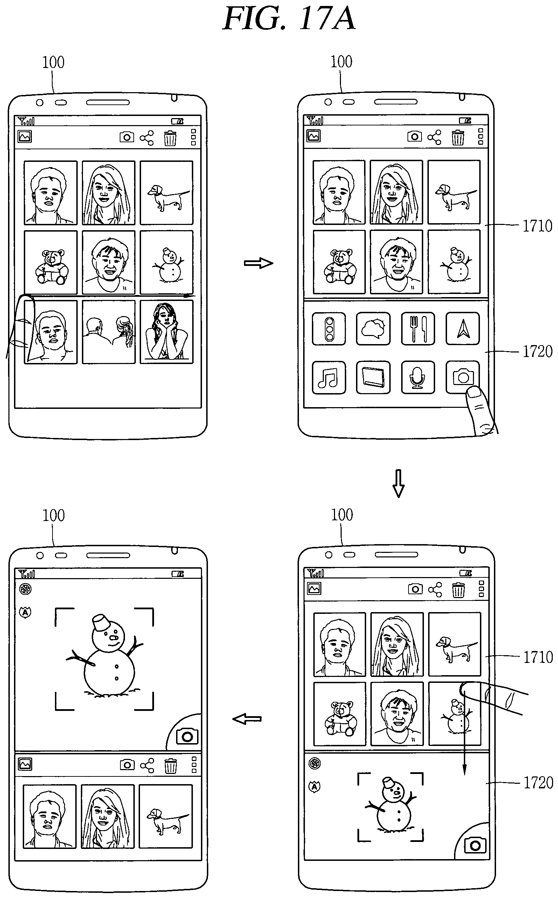

For example, as illustrated in FIG. 17A, when a dragging input consecutively moving from a left end to a right end is sensed while displaying images stored in the memory 170, the controller 180 may partition the touch screen into a first region 1710 located at the upper side and a second region 1720 located at the lower side on the basis of the trajectory of the dragging input. At least one of images that have been displayed prior to applying the dragging input may be displayed in the first region 1710, and a list of most recently executed applications or a list of applications frequently used by the user may be displayed in the second region 1720.

When any one of the list of applications is selected, an execution screen of the any one is displayed in the second region 1720. For example, as illustrated in FIG. 17A, when a camera application is selected, an image captured by the camera may be displayed as a preview screen in the second region 1720. As a result, a first execution screen is displayed in the first region 1710, and a second execution screen is displayed in the second region 1720.

The controller 180 may divide the touch screen into a first region and a second region, and control the touch screen 151 to operate screen information displayed in the first region and screen information displayed in the second region in a different manner. The first and the second region may operate like physically being separated.

On the other hand, when a dragging input due to a nail consecutively moving from either one of the first and the second region to the other one is received, the controller 180 may change the display location of first screen information that has been displayed in the first region and second screen information that has been displayed in the second region. In other words, second screen information is displayed in the first region and first screen information is displayed in the second region in response to the dragging input. Here, the size of screen information displayed in the first and the second region may be adjusted according to the size of the first and the second region.

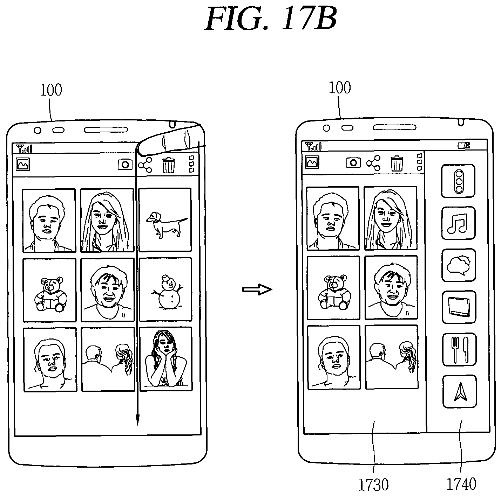

On the other hand, a first region and a second region divided by a dragging input due to a nail may be formed in a different manner according to a location and direction in which the dragging input is applied. For example, as illustrated in FIG. 17B, when a dragging input due to a nail consecutively moving from an upper end of the touch screen 151 to a lower end thereof is sensed, the controller 180 may divide the touch screen into a first region 1730 located at the left side and a second region 1740 locate at the right side on the basis of the trajectory of the dragging input.

As a result, the user may partition the touch screen 151 into a plurality of regions to use different functions using the plurality of regions.

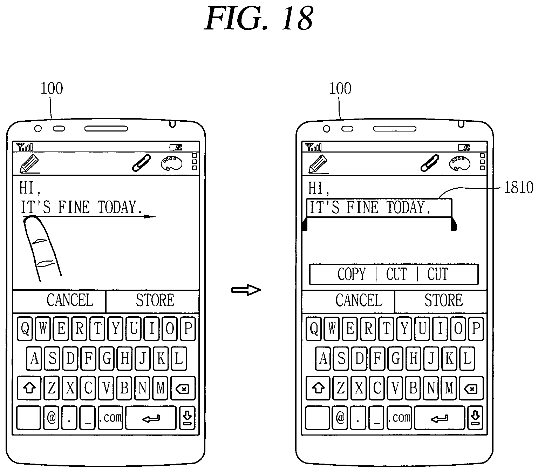

On the other hand, a dragging input to text information may be applied with a nail while displaying the text information on the touch screen 151. In this case, the controller 180 may select the text information based on the trajectory of the dragging input. Specifically, as illustrated in FIG. 18, when a touch input due to a nail is moved to a second position without being released while being applied to a first position, text that has been displayed at a position to which the touch input has moved is selected. The selected text may be highlighted to be distinguished from the other text, and objects formed to execute functions associated with the selected text may be displayed on the touch screen 151.

Since a touch input due to a nail is smaller than that due to a fingertip, the user may more accurately select text desired to be selected. Furthermore, the user may select text desired to be selected in a convenient manner without applying an additional gesture.

On the other hand, contents displayed on the touch screen may be scrolled by a dragging input. Scrolling denotes a function of moving information that has been displayed on the touch screen 151 in a vertical or horizontal direction, and displaying a new portion that has been located at the opposite side for a portion that has disappeared according to the movement. Specifically, when scrolling is carried out while displaying first screen information, second screen information different from the first screen information will be displayed.

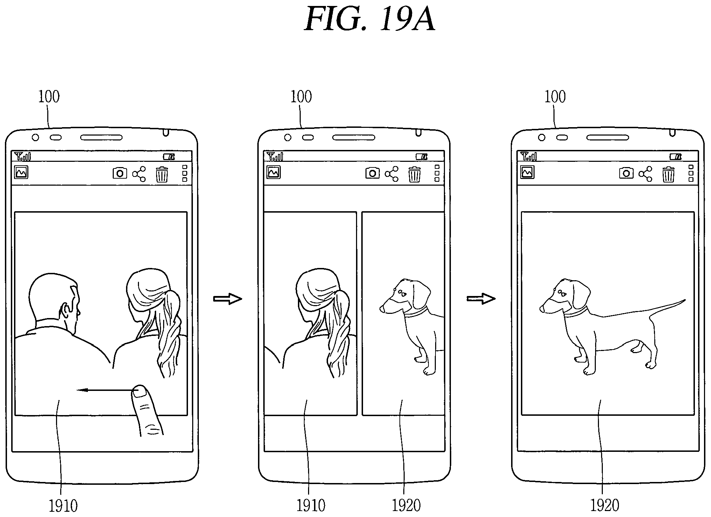

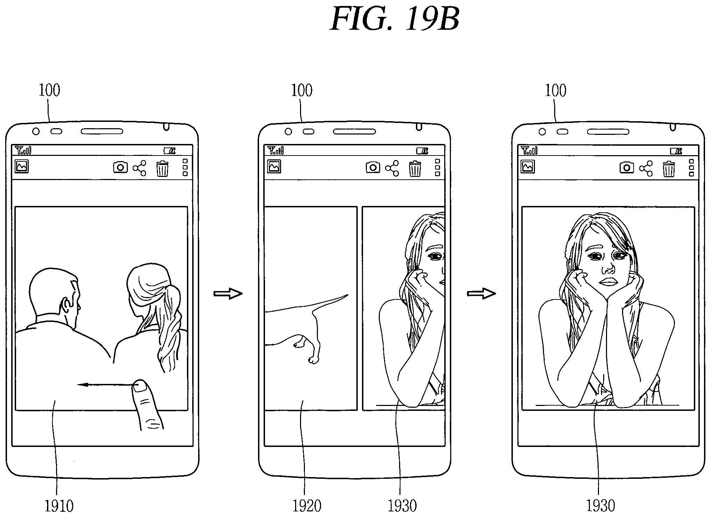

When scrolling is carried out with a dragging input, as illustrated in FIGS. 19A and 19B, the amount (or size, count) of information being scrolled varies according to the touch type of the dragging input. For example, it may be changed to a next image 1920 with a dragging input due to a fingertip as illustrated in FIG. 19A, but changed to a next image 1930 with a dragging input due to a nail as illustrated in FIG. 19B. The amount of information scrolled with a dragging input due to a nail may be modified in various ways according to the embodiment.

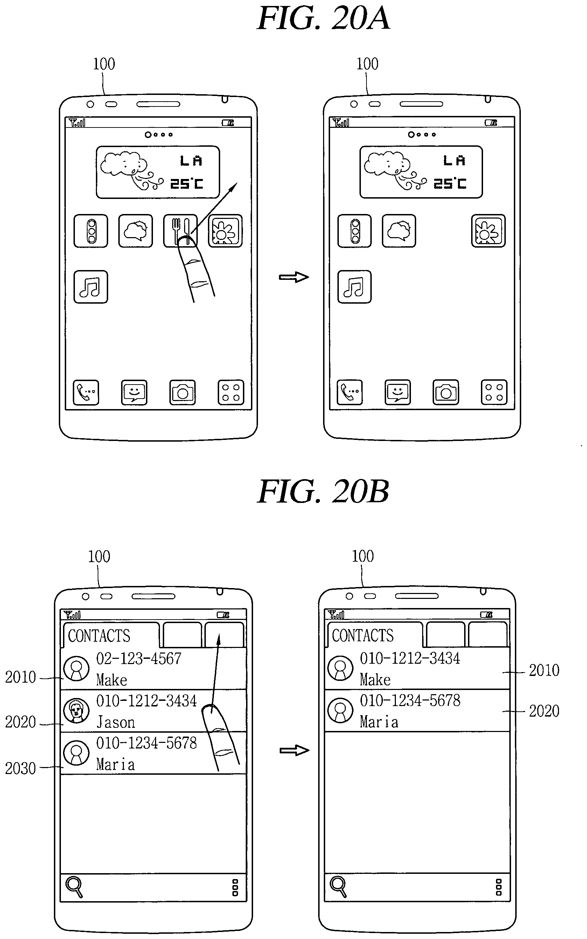

On the other hand, a dragging input to an object may be carried out with a nail. As illustrated in FIG. 20A, when a dragging input due to a nail is sensed on any one of a plurality of objects contained in a home screen page, the controller 180 may control the any one object not to be displayed on the home screen page. The any one object may be deleted on the home screen page.

Here, the controller 180 deletes the any one object when a moving distance of the dragging input is equal to the reference or greater than the reference distance, and ignores the dragging input when less than the reference distance. It is to prevent an object from being deleted contrary to the user's intention. Here, the moving distance denotes a distance between a first position to which a touch input due to a nail is applied and a second position from which the touch input is released.

In general, in order to delete a specific object on a home screen page, the user should enter the home screen page or execute an object delete mode. In other words, a specific object may be deleted from the home screen page when a plurality of user inputs should be applied. However, according to the present disclosure, an object can be deleted by one user input such as a dragging input due to a nail, thereby enhancing the user's convenience.

In a similar manner, as illustrated in FIG. 20B, when a list including a plurality of items are displayed on the touch screen 151, any one of the plurality of items may be controlled not to be displayed based on a dragging input due to the nail. Here, the any one may be deleted not to be included in the list.

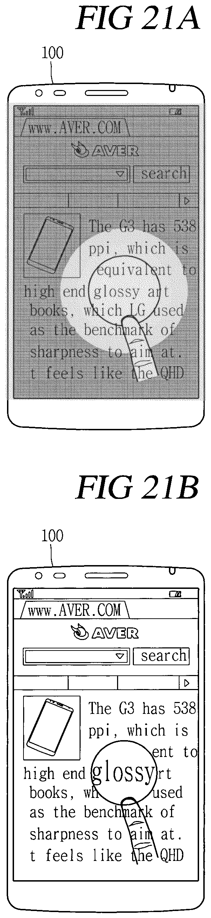

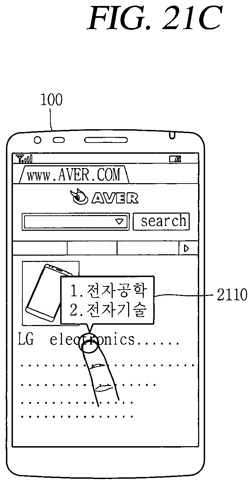

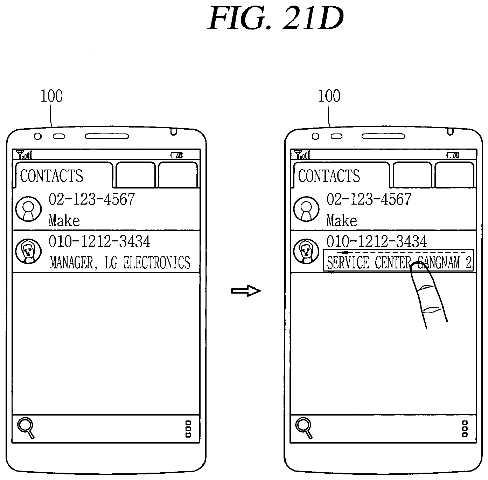

FIGS. 21A, 21B, 21C and 21D are conceptual views for explaining the operation of a mobile terminal when a touch input due to a nail is applied.

Referring to FIG. 21A, a mobile terminal according to the present disclosure may change the brightness of the touch screen 151 to a preset brightness when a preset condition is satisfied. Here, the preset brightness may correspond to the lowest brightness within a brightness range that can be adjusted by the user. When a brightness adjustment request is received from the user or an ambient brightness of the terminal body is less than the reference, the controller 180 may determined that the preset condition is satisfied.

When a touch input due to a nail is applied while the touch screen 151 displays screen information at the preset brightness, the controller 180 may adjust the brightness of a predetermined region to be different from the remaining region based on a position to which the touch input is applied. Specifically, when a touch input due to the nail is applied while the touch screen 151 displays screen information at a first brightness, the brightness of a partial region including the position to which the touch input is applied to a second brightness different from the first brightness.

When the touch input is consecutively moved without being released, the location of the partial region displaying screen information at the second brightness is changed. In other words, the user may move a portion with which the nail is brought into contact with the touch screen, thereby changing the location of a partial region in which screen information is displayed in a relatively bright manner.

On the other hand, when the touch input is released, the brightness of the partial region is restored to the first brightness from the second brightness. It minimizes a third party damage due to light emitted from the touch screen 151 and displays information desired to be checked by the user in a bright manner.

Referring to FIG. 21B, a holding gesture in which a touch input due to a nail is maintained for a predetermined period of time at the same location may be received on the touch screen 151. Upon receiving the holding gesture, The controller 180 may enlarge and display one portion containing a position at which the holding gesture is received in one region of the touch screen 151. The predetermined period of time may be set to a short period of time such as less than one second, and modified in various ways according to the embodiment. When a specific portion of the screen information displayed on the touch screen 151 is visually unclear, the user may enlarge the specific portion using the holding gesture. Such a function may be referred to as a "magnification function".

On the other hand, referring to FIG. 21C, the holding gesture may be received at any one word while displaying text information including at least one word on the touch screen 151. In this case, the controller 180 may translate the any one word into a preset language, and then display the translated word (2110) at a location adjacent to the any one word. The preset language may be differently set by a user request, and may be also set to a plurality of languages. According to the present disclosure, the user may execute a translation application or check the meaning of a specific word even without searching through a browser or the like. The function may be referred to as a "translation function".

In order to prevent the magnification function and translation function from colliding with each other, when a holding gesture is sensed, the controller 180 may execute the magnification function or translation function according to the type of information displayed at a location on which the holding gesture is sensed. Specifically, a word is displayed at a location on which the holding gesture is sensed, and the translation function is carried out when the word is not a basic language set to the terminal, and the magnification function is carried out in the other cases.

On the other hand, there may occur a case where the amount of information stored in the memory 170 or received from the outside is larger or greater than a region to be displayed on the touch screen 151. In this case, the controller 180 displays part of the information in the region, and displays an image (for example, an ellipsis) for guiding that there is information to be displayed) in the region. In this state, the controller 180 scrolls part of the displayed information to display non-displayed information in response to a touch input due to a nail being applied to the region. The user may check the scrolled information to check non-displayed information.

On the other hand, a mobile terminal according to the present disclosure may classify a touch input due to a knuckle as well as due to a fingertip and a nail. The operation of a mobile terminal using a touch input due to a knuckle will be described in detail with reference to the accompanying drawings.

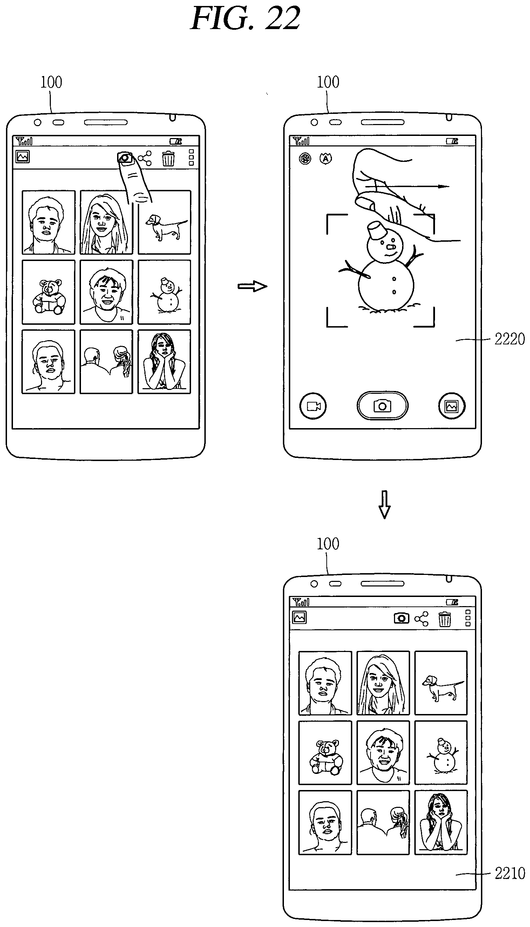

FIG. 22 is a conceptual view for explaining the operation of a mobile terminal when a touch input due to a knuckle is applied.

As any one of a plurality of applications installed in the terminal is carried out, an execution screen associated with the any one may be displayed on the touch screen 151. For example, as a first application is carried out, a first execution screen may be displayed. A second application different from the first application may be driven by an event occurrence or user request while displaying the first application, and a second execution screen associated with the second application may be displayed on the touch screen 151 instead of the first execution screen. In other words, the execution screen may be switched.

Considering a specific example, as illustrated in FIG. 22, as a photo application is carried out, a gallery screen 2210 including images stored in the memory 170 is displayed. When the user makes a touch to an icon formed to execute the camera application in this state, the camera application is carried out. Then, a preview screen 2220 in which an image captured by the camera changes in real time is displayed instead of the gallery screen 2210.

On the other hand, when a touch input due to a knuckle satisfies a preset condition, the controller 180 displays the execution screen of an application that has been most recently executed (here, an application currently being executed is excluded) instead of the execution screen of an application currently being executed. Here, the preset condition may denote a condition in which a touch input due to a knuckle is consecutively moved from a first position to a second position, and a distance between the first position and the second position is greater than a reference distance.

For example, as illustrated in FIG. 22, when a dragging input due to a knuckle satisfies the preset condition while displaying the preview screen 2220, the controller 180 displays the gallery screen 2210 instead of the preview screen 2220.

In general, a "backward function (or previous page view function)" denotes a function of displaying screen information that has been most recently displayed on the touch screen on the basis of a specific application in place of screen information currently being displayed. For example, when a "backward function" is carried out while executing a browser function, a web page will be moved.

However, when a touch input due to a knuckle satisfies a preset condition in a mobile terminal according to the present disclosure, an "application backward function (or previous application view function)" is carried out.

The controller 180 may execute a previous application view function or next application view function according to the direction of a dragging input due to a knuckle. As a result, the user may select an application to be displayed on the touch screen 151 with a simple method.

The foregoing present invention may be implemented as codes readable by a computer on a medium written by the program. The computer-readable media may include all kinds of recording devices in which data readable by a computer system is stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may include the controller 180 of the mobile terminal. Accordingly, the detailed description thereof should not be construed as restrictive in all aspects but considered as illustrative.

## Claims

1. A mobile terminal (100), comprising:
a touch screen (151);
a sensing unit (140) configured to sense a touch input applied to the touch screen (151); and
a controller (180) configured to:
receive a touch input while the touch screen (151) is in an inactivated state in which illumination is off; and
maintain the touch screen (151) to be in the inactivated state when the received touch input does not match a preset scheme,
**characterized in that** the controller (180) is further configured to:
when the received touch input matches the preset scheme, switch the touch screen (151) from the inactivated state to an activated state in which illumination is on, execute a function corresponding to the received touch input and display an execution screen of the function on the touch screen (151), wherein the controller (180) is adapted to execute a first function when the touch input corresponding to the preset scheme is applied with a fingertip, and to execute a second function different from the first function when applied with a nail.

2. The mobile terminal (100) of claim 1, wherein the touch input corresponding to the preset scheme comprises a first and a second touch input consecutively knocking a predetermined region of the touch screen (151) within a reference period of time.

3. The mobile terminal (100) of claim 2, wherein the touch screen (151) is configured to be switched from either one of the activated state and the inactivated state to the other one, and
the controller (180) is adapted to execute the first function or the second function according to the touch input corresponding to the preset scheme when the touch input corresponding to the preset scheme is applied while the touch screen (151) is in the inactivated state.

4. The mobile terminal (100) of claim 3, wherein the controller (180) is adapted to switch the touch screen (151) in the inactivated state to the activated state when the touch input corresponding to the preset scheme is applied while the touch screen (151) is in the inactivated state, and to display a first execution screen according to the execution of the first function on the touch screen (151) that has been switched to the activated state when the touch input corresponding to the preset scheme is applied with the fingertip, and to display a second execution screen according to the execution of the second function when applied with the nail.

5. The mobile terminal (100) of claim 4, wherein the controller (180) is adapted to display a locked screen formed to release a locked state while maintaining the locked state of the mobile terminal (100) when the touch input corresponding to the preset scheme is applied with the fingertip as the first execution screen, and to release the locked state to display the second execution screen on the touch screen (151) that has been switched to the activated state when the touch input corresponding to the preset scheme is applied with the nail.

6. The mobile terminal of claim 3, wherein the controller is adapted to switch the touch screen in the activated state to the inactivated state, and to display a locked screen formed to release the locked state of the terminal when the touch input corresponding to the preset scheme is applied with the fingertip while the touch screen is in the inactivated state, and to maintain the terminal in the inactivated state, and activate a microphone to receive a voice command from a user when the touch input corresponding to the preset scheme is applied with the nail while the touch screen is in the inactivated state.

7. The mobile terminal (100) of any one of claims 1 to 6, wherein the touch input corresponding to the preset scheme comprises a plurality of touch inputs consecutively applied to the touch screen (151) in a sequence matching a preset pattern in the inactivated state in which the illumination of the touch screen (151) is off, and
the controller (180) is adapted to release a locked state of the mobile terminal, and to switch the touch screen (151) in the inactivated state to the activated state in response to the touch input corresponding to the preset scheme, and to execute the first function or the second function according to the touch input corresponding to the preset scheme.

8. The mobile terminal (100) of claim 7, wherein the controller (180) is adapted to display a first execution screen according to the execution of the first function when the touch input corresponding to the preset scheme is applied with the fingertip, and to display a second execution screen according to the execution of the second function when applied with the nail.

9. The mobile terminal (100) of any one of claims 1 to 8, wherein
the controller (180) is adapted to display part of pre-stored screen information in one region of the touch screen (151) based on a touch when the touch is applied to the touch screen (151) in the inactivated state.

10. The mobile terminal (100) of claim 9, wherein the one region is formed in a different size when the touch is applied with the fingertip and when applied with the nail.

11. The mobile terminal (100) of claim 10, wherein the controller (180) is adapted to release the locked state when the movement of the touch corresponds to the preset scheme in a state that part of the screen information is displayed on the touch screen (151).

12. The mobile terminal (100) of claim 11, wherein the controller (180) is adapted to extend a range displayed with part of the screen information based on the movement of the touch.

13. The mobile terminal (100) of claim 12, wherein upon releasing the locked state, the controller (180) is adapted to display a first execution screen according to the execution of the first function when the touch is applied with the fingertip, and to display a second execution screen according to the execution of the second function when applied with the nail.

14. The mobile terminal (100) of any one of claims 1 to 13, wherein the touch screen (151) is adapted to display a home screen page containing an object formed to execute a preset application, and
the controller (180) is adapted to execute the application when a touch input due to the fingertip is applied to the object, and to display information associated with an event generated from the application in at least one region of the touch screen (151) when a touch input due to the nail is applied to the object.

15. The mobile terminal (100) of claim 14, wherein when there is no event generated from the application, an execution screen of the application instead of the information is displayed in the at least one region.

## Patentansprüche

1. Mobiles Endgerät (100), mit:
einem Berührungsbildschirm (151),
einer Erfassungseinheit (140), die dazu konfiguriert ist, eine auf den Berührungsbildschirm (151) ausgeübte Berührungseingabe zu erfassen, und
einer Steuereinheit (180), die konfiguriert ist zum:
Empfangen einer Berührungseingabe, während der Berührungsbildschirm (151) in einem inaktivierten Zustand ist, in dem eine Beleuchtung ausgeschaltet ist, und
Halten des Berührungsbildschirms (151) in dem inaktivierten Zustand, wenn die empfangene Berührungseingabe nicht mit einem vorbestimmten Schema übereinstimmt,
**dadurch gekennzeichnet, dass** die Steuereinheit (180) ferner dazu konfiguriert ist:
wenn die empfangene Berührungseingabe mit dem vorbestimmten Schema übereinstimmt, den Berührungsbildschirm (151) aus dem inaktivierten Zustand in einen aktivierten Zustand zu schalten, in dem eine Beleuchtung eingeschaltet ist,
eine der empfangenen Berührungseingabe entsprechende Funktion auszuführen und einen Ausführungsbildschirm der Funktion auf dem Berührungsbildschirm (151) anzuzeigen, wobei die Steuereinheit (180) dazu ausgeführt ist,
eine erste Funktion auszuführen, wenn die dem vorbestimmten Schema entsprechende Berührungseingabe mit einer Fingerkuppe ausgeübt wird, und
eine von der ersten Funktion verschiedene, zweite Funktion auszuführen, wenn sie mit einem Nagel ausgeübt wird.

2. Mobiles Endgerät (100) nach Anspruch 1, wobei die dem vorbestimmten Schema entsprechende Berührungseingabe eine erste und eine zweite Berührungseingabe als aufeinanderfolgendes Klopfen auf einen vorbestimmten Bereich des Berührungsbildschirms (151) innerhalb eines Bezugszeitraums umfasst.

3. Mobiles Endgerät (100) nach Anspruch 2, bei dem der Berührungsbildschirm (151) dazu konfiguriert ist, aus dem aktivierten Zustand und dem inaktivierten Zustand in den jeweils anderen geschaltet zu werden, und
die Steuereinheit (180) dazu ausgeführt ist, die erste Funktion oder die zweite Funktion gemäß der dem vorbestimmten Schema entsprechenden Berührungseingabe auszuführen, wenn die dem vorbestimmten Schema entsprechende Berührungseingabe ausgeübt wird, während sich der Berührungsbildschirm (151) in dem inaktivierten Zustand befindet.

4. Mobiles Endgerät (100) nach Anspruch 3, bei dem die Steuereinheit (180) dazu ausgeführt ist, den sich im inaktivierten Zustand befindenden Berührungsbildschirm (151) in den aktivierten Zustand zu schalten, wenn die dem vorbestimmten Schema entsprechende Berührungseingabe ausgeübt wird, während der Berührungsbildschirm (151) im inaktivierten Zustand ist, und einen ersten Ausführungsbildschirm entsprechend der Ausführung der ersten Funktion auf dem in den aktivierten Zustand geschalteten Berührungsbildschirm (151) anzuzeigen, wenn die dem vorbestimmten Schema entsprechende Berührungseingabe mit der Fingerkuppe ausgeübt wird, und einen zweiten Ausführungsbildschirm entsprechend der Ausführung der zweiten Funktion anzuzeigen, wenn sie mit dem Nagel ausgeübt wird.

5. Mobiles Endgerät (100) nach Anspruch 4, bei dem die Steuereinheit (180) dazu ausgeführt ist, einen Sperrbildschirm, der dazu ausgebildet ist, einen Sperrzustand aufzuheben unter Beibehaltung des Sperrzustandes des mobilen Endgeräts (100) als den ersten Ausführungsbildschirm anzuzeigen, wenn die dem vorbestimmten Schema entsprechende Berührungseingabe mit der Fingerkuppe ausgeübt wird, und den Sperrzustand aufzuheben, um den zweiten Ausführungsbildschirm auf dem Berührungsbildschirm (151) anzuzeigen, der in den aktivierten Zustand geschaltet worden ist, wenn die dem vorbestimmten Schema entsprechende Berührungseingabe mit dem Nagel ausgeübt wird.

6. Mobiles Endgerät nach Anspruch 3, bei dem die Steuereinheit dazu ausgeführt ist, den sich im aktivierten Zustand befindenden Berührungsbildschirm in den inaktivierten Zustand zu schalten und einen Sperrbildschirm anzuzeigen, der dazu ausgebildet ist, den Sperrzustand des Endgeräts aufzuheben, wenn die dem vorbestimmten Schema entsprechende Berührungseingabe mit der Fingerkuppe ausgeübt wird, während der Berührungsbildschirm in dem inaktivierten Zustand ist, und das Endgerät in dem inaktivierten Zustand zu halten und ein Mikrofon zum Empfangen eines Sprachbefehls von einem Benutzer zu aktivieren, wenn die dem vorbestimmten Schema entsprechende Berührungseingabe mit dem Nagel ausgeübt wird, während der Berührungsbildschirm in dem inaktivierten Zustand ist.

7. Mobiles Endgerät (100) nach einem der Ansprüche 1 bis 6, bei dem die dem vorbestimmten Schema entsprechende Berührungseingabe mehrere Berührungseingaben umfasst, die aufeinanderfolgend in einer einem vorbestimmten Muster entsprechenden Reihenfolge auf den Berührungsbildschirm (151) in dem inaktivierten Zustand ausgeübt werden, in dem die Beleuchtung des Berührungsbildschirms (151) abgeschaltet ist, und
die Steuereinheit (180) dazu ausgeführt ist, einen Sperrzustand des mobilen Endgeräts aufzuheben und den sich im inaktivierten Zustand befindenden Berührungsbildschirm (151) in Reaktion auf die dem vorbestimmten Schema entsprechende Berührungseingabe in den aktivierten Zustand zu schalten und die erste Funktion oder die zweite Funktion gemäß der dem vorbestimmten Schema entsprechenden Berührungseingabe auszuführen.

8. Mobiles Endgerät (100) nach Anspruch 7, bei dem die Steuereinheit (180) dazu ausgeführt ist, einen ersten Ausführungsbildschirm entsprechend der Ausführung der ersten Funktion anzuzeigen, wenn die dem vorbestimmten Schema entsprechende Berührungseingabe mit der Fingerkuppe ausgeübt wird, und einen zweiten Ausführungsbildschirm entsprechend der Ausführung der zweiten Funktion anzuzeigen, wenn sie mit dem Nagel ausgeübt wird.

9. Mobiles Endgerät (100) nach einem der Ansprüche 1 bis 8, bei dem die Steuereinheit (180) dazu ausgeführt ist, einen Teil vorgespeicherter Bildschirminformation in einem Bereich des Berührungsbildschirms (151) anzuzeigen basierend auf einer Berührung, wenn die Berührung auf den Berührungsbildschirm (151) in dem inaktivierten Zustand ausgeübt wird.

10. Mobiles Endgerät (100) nach Anspruch 9, bei dem der eine Bereich in einer unterschiedlichen Größe ausgebildet ist, wenn die Berührung mit der Fingerkuppe ausgeführt wird und wenn sie mit dem Nagel ausgeführt wird.

11. Mobiles Endgerät (100) nach Anspruch 10, bei dem die Steuereinheit (180) dazu ausgeführt ist, den Sperrzustand aufzuheben, wenn die Bewegung der Berührung dem vorbestimmten Schema in einem Zustand entspricht, in dem ein Teil der Bildschirminformation auf dem Berührungsbildschirm (151) angezeigt wird.

12. Mobiles Endgerät (100) nach Anspruch 11, bei die Steuereinheit (180) dazu ausgeführt ist, basierend auf der Bewegung der Berührung einen Bereich auszudehnen, in dem ein Teil der Bildschirminformation angezeigt wird.

13. Mobiles Endgerät (100) nach Anspruch 12, bei dem nach Aufheben des Sperrzustandes die Steuereinheit (180) dazu ausgeführt ist, einen ersten Ausführungsbildschirm entsprechend der Ausführung der ersten Funktion anzuzeigen, wenn die Berührung mit der Fingerkuppe ausgeübt wird, und einen zweiten Ausführungsbildschirm entsprechend der Ausführung der zweiten Funktion anzuzeigen, wenn sie mit dem Nagel ausgeübt wird.

14. Mobiles Endgerät (100) nach einem der Ansprüche 1 bis 13, bei dem der Berührungsbildschirm (151) dazu ausgeführt ist, eine Startbildschirmseite mit einem Objekt anzuzeigen, welches dazu ausgebildet ist, eine vorbestimmte Anwendung auszuführen, und
die Steuereinheit (180) dazu ausgeführt ist, die Anwendung auszuführen, wenn eine auf die Fingerkuppe zurückgehende Berührungseingabe auf das Objekt ausgeübt wird, und mit einem aus der Anwendung erzeugten Ereignis zusammenhängende Information in wenigstens einem Bereich des Berührungsbildschirms (151) anzuzeigen, wenn eine auf den Nagel zurückgehende Berührungseingabe auf das Objekt ausgeübt wird.

15. Mobiles Endgerät (100) nach Anspruch 14, bei dem dann, wenn kein aus der Anwendung erzeugtes Ereignis vorliegt, ein Ausführungsbildschirm der Anwendung anstelle der Information in dem wenigstens einen Bereich angezeigt wird.

## Revendications

1. Terminal mobile (100), comprenant :
un écran tactile (151) ;
une unité de détection (140) configurée pour détecter une entrée tactile appliquée sur l'écran tactile (151) ; et
un contrôleur (180) configuré pour :
recevoir une entrée tactile alors que l'écran tactile (151) se trouve dans un état inactif dans lequel l'éclairage est éteint, et
maintenir l'écran tactile (151) dans l'état inactif lorsque l'entrée tactile reçue ne correspond pas à un schéma préétabli,
**caractérisé en ce que** le contrôleur (180) est en outre configuré pour :
lorsque l'entrée tactile reçue correspond au schéma préétabli, commuter l'écran tactile (151) de l'état inactif à un état actif dans lequel l'éclairage est allumé,
exécuter une fonction correspondant à l'entrée tactile reçue et afficher un écran d'exécution de la fonction sur l'écran tactile (151),
dans lequel le contrôleur (180) est adapté pour
exécuter une première fonction lorsque l'entrée tactile correspondant au schéma préétabli est appliquée avec le bout du doigt, et pour
exécuter une deuxième fonction différente de la première fonction lorsque l'entrée tactile est appliquée avec un ongle.

2. Terminal mobile (100) selon la revendication 1, dans lequel l'entrée tactile correspondant au schéma préétabli comprend des première et deuxième entrées tactiles en tapotant de manière consécutive une région prédéterminée de l'écran tactile (151) à l'intérieur d'une période de temps de référence.

3. Terminal mobile (100) selon la revendication 2, dans lequel l'écran tactile (151) est configuré pour être commuté de l'un ou l'autre parmi l'état actif et l'état inactif à l'autre état, et
le contrôleur (180) est adapté pour exécuter
la première fonction ou la deuxième fonction conformément à l'entrée tactile correspondant au schéma préétabli lorsque l'entrée tactile correspondant au schéma préétabli est appliquée pendant que l'écran tactile (151) se trouve dans l'état inactif.

4. Terminal mobile (100) selon la revendication 3, dans lequel le contrôleur (180) est adapté pour
commuter l'écran tactile (151) de l'état inactif à l'état actif lorsque l'entrée tactile correspondant au schéma préétabli est appliquée alors que l'écran tactile (151) se trouve dans l'état inactif, et pour
afficher un premier écran d'exécution conformément à l'exécution de la première fonction sur l'écran tactile (151) qui a été commuté vers l'état actif lorsque l'entrée tactile correspondant au schéma préétabli est appliquée avec le bout du doigt, et afficher un deuxième écran d'exécution conformément à l'exécution de la deuxième fonction lorsque l'entrée est appliquée avec l'ongle.

5. Terminal mobile (100) selon la revendication 4, dans lequel le contrôleur (180) est adapté pour afficher un écran verrouillé formé pour libérer un état verrouillé tout en maintenant l'état verrouillé du terminal mobile (100) lorsque l'entrée tactile correspondant au schéma préétabli est appliquée avec le bout du doigt en tant que premier écran d'exécution, et pour libérer l'état verrouillé pour afficher le deuxième écran d'exécution sur l'écran tactile (151) qui a été commuté vers l'état actif lorsque l'entrée tactile correspondant au schéma préétabli est appliquée avec l'ongle.

6. Terminal mobile selon la revendication 3, dans lequel le contrôleur est adapté pour commuter l'écran tactile de l'état actif à l'état inactif, et pour afficher un écran verrouillé formé pour libérer l'état verrouillé du terminal lorsque l'entrée tactile correspondant au schéma préétabli est appliquée avec le bout du doigt alors que l'écran tactile se trouve dans l'état inactif, et pour maintenir le terminal dans l'état inactif, et activer un microphone pour recevoir une commande vocale d'un utilisateur lorsque l'entrée tactile correspondant au schéma préétabli est appliquée avec l'ongle alors que l'écran tactile se trouve dans l'état inactif.

7. Terminal mobile (100) selon l'une quelconque des revendications 1 à 6, dans lequel l'entrée tactile correspondant au schéma préétabli comprend une pluralité d'entrées tactiles appliquées de manière consécutive sur l'écran tactile (151) dans une séquence correspondant à un schéma préétabli dans l'état inactif dans lequel l'éclairage de l'écran tactile (151) est éteint, et
le contrôleur (180) est adapté pour libérer un état verrouillé du terminal mobile, et pour commuter l'écran tactile (151) de l'état inactif à l'état actif en réponse à l'entrée tactile correspondant au schéma préétabli, et pour exécuter la première fonction ou la deuxième fonction conformément à l'entrée tactile correspondant au schéma préétabli.

8. Terminal mobile (100) selon la revendication 7, dans lequel le contrôleur (180) est adapté pour afficher un premier écran d'exécution conformément à l'exécution de la première fonction lorsque l'entrée tactile correspondant au schéma préétabli est appliquée avec le bout du doigt, et pour afficher un deuxième écran d'exécution conformément à l'exécution de la deuxième fonction lorsque l'entrée est appliquée avec l'ongle.

9. Terminal mobile (100) selon l'une quelconque des revendications 1 à 8, dans lequel le contrôleur (180) est adapté pour afficher une partie des informations d'écran pré-mémorisées dans une région de l'écran tactile (151) sur la base d'un toucher lorsque le toucher est appliqué sur l'écran tactile (151) dans l'état inactif.

10. Terminal mobile (100) selon la revendication 9, dans lequel la une région est formée dans une taille différente lorsque le toucher est appliqué avec le bout du doigt et lorsque le toucher est appliqué avec l'ongle.

11. Terminal mobile (100) selon la revendication 10, dans lequel le contrôleur (180) est adapté pour libérer l'état verrouillé lorsque le mouvement du toucher correspond au schéma préétabli dans un état dans lequel une partie des informations d'écran sont affichées sur l'écran de tactile (151).

12. Terminal mobile (100) selon la revendication 11, dans lequel le contrôleur (180) est adapté pour élargir une plage affichée avec une partie des informations d'écran sur la base du mouvement du toucher.

13. Terminal mobile (100) selon la revendication 12, dans lequel sur libération de l'état verrouillé, le contrôleur (180) est adapté pour afficher un premier écran d'exécution conformément à l'exécution de la première fonction lorsque le toucher est appliqué avec le bout du doigt, et pour afficher un deuxième écran d'exécution conformément à l'exécution de la deuxième fonction lorsque le toucher est appliqué avec l'ongle.

14. Terminal mobile (100) selon l'une quelconque des revendications 1 à 13, dans lequel l'écran tactile (151) est adapté pour afficher une page d'écran d'accueil contenant un objet formé pour exécuter une application préétablie, et
le contrôleur (180) est adapté pour exécuter l'application lorsqu'une entrée tactile est appliquée avec le bout du doigt sur l'objet, et pour afficher des informations associées avec un événement généré à partir de l'application dans au moins une région de l'écran tactile (151) lorsqu'une entrée tactile est appliquée avec l'ongle sur l'objet.

15. Terminal mobile (100) selon la revendication 14, dans lequel lorsque qu'aucun événement n'est généré depuis l'application, un écran d'exécution de l'application est affiché à la place des informations dans la au moins une région.
